# EUROPEAN PATENT APPLICATION

(11) **EP 4 376 487 A1**
(43) Date of publication of application: **29.05.2024**
(21) Application number: 22851784.3
(22) Date of filing: 30.06.2022
(51) Int. Cl.: H04W 48/02, H04W 76/32

(54) **COMMUNICATION METHOD AND APPARATUS**

(30) Priority: 06.08.2021 CN 202110904039
(71) Applicant: Huawei Technologies Co., Ltd., Shenzhen, Guangdong 518129 (CN)
(72) Inventor: LEI, Zhongding, Shenzhen, Guangdong 518129 (CN); WANG, Haiguang, Shenzhen, Guangdong 518129 (CN)
(74) Representative: Isarpatent
(86) International application number: PCT/CN2022/103024
(87) International publication number: WO 2023/011069

(57) **Abstract**

This application relates to a communication method and apparatus. The method includes: An admission control network function receives a first message, where the first message includes first parameter information used to update a number of terminal devices or sessions in a first network slice. The admission control network function verifies validity of the first parameter information. If the first parameter information is valid, the admission control network function updates the number of terminal devices or sessions in the first network slice. When the first parameter information is valid, the number of terminal devices or sessions in the first network slice may be updated. When the first parameter information is false, it indicates that the first parameter information is forged incorrect information, and the number of terminal devices or sessions in the first network slice is not updated. According to this solution, incorrect updating, caused by a false message, on a configuration of a network slice can be reduced, and stability of a service provided by the network slice can be improved.

## Description

### CROSS-REFERENCE TO RELATED APPLICATIONS

This application claims priority to Chinese Patent Application No. 202110904039.6, filed with the China National Intellectual Property Administration on August 6, 2021 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

An access and mobility management function (access and mobility management function, AMF) may send an availability check and terminal number update (availability check and update, ACU) request to a network slice admission control function (Network Slice Admission Control Function, NSACF), and the NSACF updates, based on the ACU request, a number of terminal devices registered with a network slice identified as single network slice selection assistance information (single network slice selection assistance information, S-NSSAI). When an admission quota of the number of terminal devices in the network slice is full, the NSACF sends a corresponding notification to the AMF, so that the AMF may reject an access request of a terminal device.

Alternatively, a session management function (session management function, SMF) may send an ACU request to an NSACF, and the NSACF updates, based on the ACU request, a number of protocol data unit (protocol data unit, PDU) sessions established in a network slice identified as S-NSSAI. When an admission quota of the number of PDU sessions in the network slice is full, the NSACF sends a corresponding notification to the SMF, so that the SMF may reject a session establishment request of a terminal device.

However, after an NF in a network is attacked, the NF may send a false ACU request to an NSACF, and consequently the NSACF incorrectly updates a number of registered terminal devices or a number of established PDU sessions in a network slice. As a result, another terminal device cannot normally access the network slice or the terminal device cannot normally establish a new PDU session, and a network slice service is degraded or a service cannot be normally provided.

### SUMMARY

This application provides a communication method and apparatus, to reduce incorrect updating, caused by a false message, on a configuration of a network slice, and improve stability of a service provided by the network slice.

According to a first aspect, a communication method is provided. The method includes the following process: An admission control network function receives a first message, where the first message includes first parameter information used to update a number of terminal devices or sessions in a first network slice. The admission control network function verifies validity of the first parameter information. If the first parameter information is valid, the admission control network function updates the number of terminal devices or sessions in the first network slice.

The first parameter information may include one or more of the following information: a terminal device identifier, an identifier of the first network slice, an access management network function identifier, first indication information for requesting registration or deregistration, second indication information for requesting session establishment or release, a terminal device access type, a session identifier, a data network identifier, a session management network function identifier, or a session status.

For example, if the first parameter information is used to update the number of terminal devices in the first network slice, the first parameter information may include one or more of the following information: the terminal device identifier, the identifier of the first network slice, the access management network function identifier, the first indication information for requesting registration or deregistration, and the terminal device access type.

In another example, if the first parameter information is used to update the number of sessions in the first network slice, the first parameter information may include one or more of the following information: the terminal device identifier, the identifier of the first network slice, the second indication information for requesting session establishment or release, the session identifier, the data network identifier, the session management network function identifier, and the session status.

The admission control network function may be an NSACF.

When the admission control network function verifies the validity of the first parameter information, the admission control network function may verify the validity of the first parameter information by itself, or the admission control network function may request another network function to verify the validity of the first parameter information.

In the method, the admission control network function receives the first parameter information, where the first parameter information is used to update the number of terminal devices or sessions in the first network slice. The admission control network function may verify the validity of the first parameter information. When the first parameter information is valid, the number of terminal devices or sessions in the first network slice may be updated. When the first parameter information is false, it indicates that the first parameter information is forged incorrect information, and the number of terminal devices or sessions in the first network slice is not updated. This can reduce incorrect updating, caused by a false message, on a configuration of a network slice, ensure that the terminal device can normally access the network slice or can normally establish the PDU session, and improve stability of a service provided by the network slice.

In a possible implementation, when the admission control network function verifies the validity of the first parameter information, one or more of the following manners may be used:
the admission control network function verifies whether a terminal device corresponding to the terminal device identifier has subscribed to a service of a network to which the first network slice belongs or a service of a home network corresponding to the first network slice;
the admission control network function verifies whether the terminal device has subscribed to a service of the first network slice or has subscribed to a service of a network slice of a home network corresponding to the first network slice;
the admission control network function verifies whether the terminal device has registered with a network to which the first network slice belongs;
the admission control network function verifies whether the terminal device has accessed the first network slice;
the admission control network function verifies whether the terminal device has registered with a network by using an access management network function corresponding to the access management network function identifier;
the admission control network function verifies whether the terminal device has accessed the first network slice by using an access management network function;
the admission control network function verifies whether the terminal device has accessed a network via the terminal device access type;
the admission control network function verifies whether the registration or deregistration request indicated by the first indication information matches a stored registration status of the terminal device;
the admission control network function verifies whether the session establishment or release request indicated by the second indication information matches a stored session status of the terminal device;
the admission control network function verifies whether the session identifier or a session corresponding to the session identifier exists;
the admission control network function verifies whether the session identifier or a session corresponding to the session identifier belongs to the terminal device;
the admission control network function verifies whether the session identifier or a session corresponding to the session identifier belongs to the first network slice;
the admission control network function verifies whether a session corresponding to the session identifier is managed by a session management network function corresponding to the session management network function identifier;
the admission control network function verifies whether the session status is consistent with a current status of the session; or
the admission control network function verifies whether the first network slice matches a data network corresponding to the data network identifier.

In this implementation, the admission control network function may verify the validity of the first parameter information by itself. Second parameter information used to verify the validity of the first parameter information may be pre-stored in the admission control network function, or may be obtained by the admission control network function from another network function.

In a possible implementation, before verifying the validity of the first parameter information, the admission control network function may send a fifth message to a data management network function, where the fifth message is used to request the second parameter information, and the second parameter information is used to verify the validity of the first parameter information; and receive a sixth message from the data management network function, where the sixth message includes the second parameter information. In this way, when verifying the validity of the first parameter information, the admission control network function may verify the validity of the first parameter information based on the second parameter information in the sixth message. In this implementation, the admission control network function may not store real second parameter information.

In a possible implementation, when verifying the validity of the first parameter information, the admission control network function may send a second message to a data management network function, where the second message is used to request to verify the first parameter information; and receive a third message, where the third message includes a verification result of the first parameter information, and the verification result is used to indicate that the first parameter information is valid or false. In this implementation, the admission control network function may request another network function (for example, the data management network function) to verify the validity of the first parameter information.

In a possible implementation, the second message includes one or more of the following information: the terminal device identifier, indication information for verifying a subscription status of a terminal device, indication information for verifying an access status of a terminal device, the identifier of the first network slice, an identifier of a slice corresponding to the first network slice in a home network, the access management network function identifier, the first indication information for requesting registration or deregistration, the second indication information for requesting session establishment or release, the terminal device access type, a session identifier, the data network identifier, the session management network function identifier, or the session status.

In a possible implementation, before verifying the validity of the first parameter information, the admission control network function may further determine that a first condition is satisfied. That a first condition is satisfied includes one or more of the following: duration of a timer reaches first duration, a number of times of receiving the first message reaches a first count threshold, a number of accessed terminal devices or sessions reaches a first number threshold, and indication information for triggering verification is received. In this implementation, a specific first condition is set, and the verification is determined to be triggered when the first condition is satisfied. In this way, a large amount of first parameter information received simultaneously or in a short time can be avoided from being verified, thereby decreasing processing load of the admission control network function and improving processing efficiency of the admission control network function.

In a possible implementation, the first message is sent when an early admission control mode is inactive and a number of terminal devices that request to access the first network slice reaches a second number threshold. When the early admission control mode is the inactive state, the access management network function may first authorize the terminal device to access the first network slice, and then perform an ACU procedure. In this implementation, the second number threshold is set, to avoid a risk that a number of terminal devices exceeds a configuration of the first network slice because the access management network function authorizes a large number of terminal devices to access the first network slice simultaneously or in a short time, thereby further improving stability of a service provided by the network slice.

According to a second aspect, a communication method is provided. The communication method includes the following process: A data management network function receives a second message, where the second message is used to request to verify first parameter information, and the first parameter information is used to update a number of terminal devices or sessions in a first network slice. The data management network function may verify the first parameter information based on obtained second parameter information about a terminal device or a session. The data management network function sends a third message to an admission control network function, where the third message includes a verification result of the first parameter information, and the verification result includes that the first parameter information is valid or false.

The data management network function may be unified data management (UDM) and/or unified data storage (UDR).

In the method, the data management network function may verify validity of the first parameter information received by the admission control network function. This can reduce incorrect updating, caused by a false message, on a configuration of a network slice, and improve stability of a service provided by the network slice.

In a possible implementation, the second message includes one or more of the following information: a terminal device identifier, indication information for verifying a subscription status of a terminal device, indication information for verifying an access status of a terminal device, an identifier of the first network slice, an identifier of a slice corresponding to the first network slice in a home network, an access management network function identifier, first indication information for requesting registration or deregistration, second indication information for requesting session establishment or release, a terminal device access type, a session identifier, a data network identifier, a session management network function identifier, or a session status.

In a possible implementation, when the data management network function may verify the first parameter information based on the obtained second parameter information of a terminal device or a session, one or more of the following manners may be used:
the data management network function verifies a subscription status of the terminal device based on the indication information for verifying a subscription status of a terminal device;
the data management network function verifies whether a terminal device corresponding to the terminal device identifier has subscribed to a service of a network to which the first network slice belongs or a service of a home network corresponding to the first network slice;
the data management network function verifies whether the terminal device has subscribed to a service of the first network slice or has subscribed to a service of a network slice of a home network corresponding to the first network slice;
the data management network function verifies an access status of the terminal device based on the indication information for verifying an access status of a terminal device;
the data management network function verifies whether the terminal device has registered with a network to which the first network slice belongs;
the data management network function verifies whether the terminal device has accessed the first network slice;
the data management network function verifies whether the terminal device has registered with a network by using an access management network function corresponding to the access management network function identifier;
the data management network function verifies whether the terminal device has accessed the first network slice by using an access management network function;
the data management network function verifies whether the terminal device has accessed a network via the terminal device access type;
the data management network function verifies whether the registration or deregistration request indicated by the first indication information matches a stored registration status of the terminal device;
the data management network function verifies whether the session establishment or release request indicated by the second indication information matches a stored session status of the terminal device;
the data management network function verifies whether the session identifier or a session corresponding to the session identifier exists;
the data management network function verifies whether the session identifier or a session corresponding to the session identifier belongs to the terminal device;
the data management network function verifies whether the session identifier or a session corresponding to the session identifier belongs to the first network slice;
the data management network function verifies whether a session corresponding to the session identifier is managed by a session management network function corresponding to the session management network function identifier;
the data management network function verifies whether the session status is consistent with a current status of the session; or
the data management network function verifies whether the first network slice matches a data network corresponding to the data network identifier.

According to a third aspect, a communication method is provided. The communication method includes the following process: when an early admission control mode is inactive, an access management network function determines a number of terminal devices that request to access a first network slice. If the number of terminal devices that request to access a first network slice reaches a second number threshold, the access management network function sends a first message to an admission control network function, where the first message is used to update the number of terminal devices in the first network slice.

When the early admission control mode is the inactive state, the access management network function may first authorize the terminal device to access the first network slice, and then perform an ACU procedure. However, there may be a risk that a number of accessed terminal devices exceeds a configuration of the first network slice because a large number of terminal devices is authorized to access the first network slice simultaneously or in a short time. Therefore, the second number threshold can be set to ensure that the number of accessed terminal devices is within a number range of services that can be stably provided by the first network slice, thereby improving stability of a service provided by the network slice.

The access management network function may be an AMF.

In a possible implementation, the access management network function may further receive a fourth message sent by the admission control network function, where the fourth message is used to modify the early admission control mode to the inactive state. The access management network function may verify the fourth message. If the verification succeeds, the access management network function determines that the early admission control mode is the inactive state.

In this implementation, the access management network function may verify validity of the fourth message. When the fourth message is valid, the access management network function may modify the early admission control mode to the inactive state. When the fourth message is false, it indicates that the fourth message is a forged incorrect message, and the access management network function does not modify the early admission control mode. This can reduce a risk that the early admission control mode is maliciously tampered with, and further improve stability of a service provided by the network slice.

In a possible implementation, the fourth message may include one or more of the following information: an admission control network function identifier, an identifier of an operator network in which the admission control network function is located, and an identifier of the first network slice.

When verifying the fourth message, the access management network function may verify one or more of the admission control network function identifier, the identifier of the operator network in which the admission control network function is located, and the identifier of the first network slice.

According to a fourth aspect, a communication apparatus is provided. The communication apparatus may be the foregoing admission control network function, the foregoing data management network function, or the foregoing access management network function, or may be a chip disposed in the admission control network function, the foregoing data management network function, the foregoing access management network function, or the foregoing session management network function. The communication apparatus may implement the method provided in any design of the first aspect, the second aspect, or the third aspect.

The communication apparatus includes a corresponding module, unit, or means (means) for implementing the foregoing method. The module, unit, or means may be implemented by using hardware or software, or implemented by using hardware by executing corresponding software. The hardware or the software includes one or more modules or units corresponding to the foregoing functions.

According to a fifth aspect, a communication apparatus is provided. The communication apparatus includes a transceiver unit. Optionally, the communication apparatus further includes a processing unit. The communication apparatus may implement the method provided in any design of the first aspect, the second aspect, or the third aspect.

According to a sixth aspect, a communication apparatus is provided. The communication apparatus includes a processor. The processor may be configured to perform the method provided in any design of the first aspect, the second aspect, or the third aspect. Optionally, the apparatus further includes a memory. The processor is coupled to the memory. The memory is configured to store a computer program or instructions. The processor may execute the program or the instructions in the memory, so that the apparatus can perform the method provided in any design of the first aspect, the second aspect, or the third aspect.

According to a seventh aspect, a communication apparatus is provided. The apparatus includes an interface circuit and a logic circuit, and the logic circuit is coupled to the interface circuit. The interface circuit may be a code/data read/write interface circuit, or a communication interface. The interface circuit is configured to receive computer-executable instructions (the computer-executable instructions are stored in a memory, and may be directly read from the memory, or may be transmitted by using another component) and transmit the computer-executable instructions to the logic circuit, so that the logic circuit runs the computer-executable instructions to perform the method provided in any one of the first aspect, the second aspect, or the third aspect.

In some possible designs, the communication apparatus may be a chip or a chip system.

According to an eighth aspect, a communication apparatus is provided. The communication apparatus includes a processor and a memory. The processor is configured to read instructions stored in the memory, receive a signal by using a receiver, and transmit the signal by using a transmitter, to perform the method provided in any design of the first aspect, the second aspect, or the third aspect.

Optionally, there may be one or more processors, and one or more memories. Optionally, the memory may be integrated with the processor, or the memory and the processor are disposed separately.

In a specific implementation process, the memory may be a non-transitory (non-transitory) memory, for example, a read-only memory (read-only memory, ROM). The memory and the processor may be integrated on a same chip, or may be disposed on different chips. A type of the memory and a manner of disposing the memory and the processor are not limited in this application.

The communication apparatus may be a chip, and the processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated in the processor, or may be located outside the processor and exist independently.

According to a ninth aspect, a processor is provided. The processor includes an input circuit, an output circuit, and a processing circuit. The processing circuit is configured to receive a signal by using the input circuit, and transmit the signal by using the output circuit, so that the processor performs the method provided in any design of the first aspect, the second aspect, or the third aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a tenth aspect, a communication apparatus is provided. The communication apparatus includes a logic circuit and an input/output interface. The input/output interface is configured to communicate with a module other than the communication apparatus. The logic circuit is configured to run a computer program or instructions to perform the method provided in any design of any one of the foregoing aspects. The communication apparatus may be the admission control network function, the data management network function, the access management network function, or the session management function in the first aspect, the second aspect, or the third aspect, or an apparatus including the admission control network function, the data management network function, the access management network function, or the session management function, or an apparatus included in the admission control network function, the data management network function, the access management network function, or the session management function, for example, a chip.

Alternatively, the input/output interface may be a code/data read/write interface circuit, or a communication interface. The input/output interface is configured to: receive a computer program or instructions (the computer program or instructions is/are stored in a memory, and may be directly read from the memory, or may pass through another component), and transmit the computer program or instructions to the input/output interface, so that the input/output interface runs the computer program or instructions to perform the method according to any one of the foregoing aspects.

Optionally, the communication apparatus may be a chip.

According to an eleventh aspect, a computer program product is provided. The computer program product includes a computer program (which may also be referred to as code or an instruction), and when the computer program is run, a computer is enabled to perform the method provided in any design of the first aspect, the second aspect, or the third aspect.

According to a twelfth aspect, a computer-readable medium is provided. The computer-readable medium stores a computer program (which may also be referred to as code or an instruction), and when the computer program is run on a computer, the computer is enabled to perform the method provided in any design of the first aspect, the second aspect, or the third aspect.

According to a thirteenth aspect, a chip system is provided. The chip system includes a processor and an interface, and is configured to support a communication apparatus to implement the function provided in any design of the first aspect, the second aspect, or the third aspect. In a possible design, the chip system further includes a memory, configured to store necessary information and data of the foregoing communication apparatus. The chip system may include a chip, or may include a chip and another discrete component.

According to a fourteenth aspect, a chip apparatus is provided. The chip apparatus includes an input interface and/or an output interface. The input interface may implement the receiving function provided in any design of the first aspect, the second aspect, or the third aspect, and the output interface may implement the sending function provided in any design of the first aspect, the second aspect, or the third aspect.

According to a fifteenth aspect, a functional entity is provided. The functional entity is configured to implement the method provided in any design of the first aspect to the third aspect.

According to a sixteenth aspect, a communication system is provided. The communication system includes the admission control network function, the data management network function, the access management network function, or the session management function in the first aspect, the second aspect, or the third aspect.

For technical effects achieved by any one of the designs of the second aspect to the sixteenth aspect, refer to the technical effects achieved by the first aspect. Details are not described again.

### BRIEF DESCRIPTION OF DRAWINGS

FIG. 1 is a schematic diagram of a possible network architecture to which an embodiment of this application is applicable;
FIG. 2 is a schematic diagram of an ACU procedure;
FIG. 3 is a schematic diagram of an ACU procedure;
FIG. 4 is a schematic diagram of a communication process to which an embodiment of this application is applicable;
FIG. 5 is a schematic diagram of a communication process to which an embodiment of this application is applicable;
FIG. 6 is a schematic flowchart of early admission control;
FIG. 7 is a schematic flowchart of early admission control;
FIG. 8 is a schematic diagram of a communication process to which an embodiment of this application is applicable;
FIG. 9 is a schematic diagram of a communication apparatus to which an embodiment of this application is applicable;
FIG. 10 is a schematic diagram of a communication apparatus to which an embodiment of this application is applicable; and
FIG. 11 is a schematic diagram of a communication apparatus to which an embodiment of this application is applicable.

### DESCRIPTION OF EMBODIMENTS

The following further describes in detail this application with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, the word "example" in embodiments of this application is used to represent giving an example, an illustration, or a description. Any embodiment or design solution described as an "example" in this application should not be explained as being more preferred or having more advantages than another embodiment or design solution. Exactly, the word "example" is intended to present a concept in a specific manner.

A network architecture and a service scenario that are described in embodiments of this application are intended to describe the technical solutions in embodiments of this application more clearly, and do not constitute any limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

The following describes some terms in embodiments of this application, to facilitate understanding of a person skilled in the art.
(1) User equipment (user equipment, UE), also referred to as a terminal device, is a device having a wireless transceiver function, and may communicate with one or more core network (core network, CN) devices through an access network device in a radio access network (radio access network, RAN).

The user equipment may also be referred to as an access terminal, a terminal, a subscriber unit, a subscriber station, a mobile station, a remote station, a remote terminal, a mobile device, a user terminal, a user agent, a user apparatus, or the like. The user equipment may be deployed on land, where the deployment includes indoor or outdoor, or handheld or vehicle-mounted deployment; may be deployed on a water surface (such as a ship); or may be deployed in the air (for example, on an airplane, a balloon, or a satellite). The user equipment may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the user equipment may be a handheld device or a computing device having a wireless communication function, another device connected to a wireless modem, a vehicle-mounted device, a wearable device, an unmanned aerial vehicle device, a terminal in an internet of things or an internet of vehicles, any form terminal or relay user equipment in a 5th generation (5^{th} generation, 5G) network or a future network, a terminal in a future evolved public land mobile network (public land mobile network, PLMN), or the like. The relay user equipment may be, for example, a 5G residential gateway (residential gateway, RG). For example, the user equipment may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), or a wireless terminal in a smart home (smart home). A type, a category, or the like of the terminal device is not limited in embodiments of this application.

(2) A network device is a device that can provide a wireless access function for a terminal. The network device may support at least one wireless communication technology, for example, long term evolution (long term evolution, LTE) or new radio (new radio, NR).

For example, the network device may include an access network device. For example, the network device includes but is not limited to: a next generation base station or a next generation NodeB (generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmission reception point, TRP), a transmission point (transmission point, TP), a mobile switching center, a small cell, a micro cell, or the like in 5G. The network device may alternatively be a radio controller, a central unit (central unit, CU), and/or a distributed unit (distributed unit, DU) in a cloud radio access network (cloud radio access network, CRAN) scenario. Alternatively, the network device may be a relay station, an access point, a vehicle-mounted device, a terminal, a wearable device, a network device in future mobile communication, a network device in a future evolved PLMN, or the like.

For another example, the network device may include a core network (CN) device, and the core network device is, for example, an AMF or an SMF.

The term "and/or" describes an association relationship for describing associated objects and represents that three relationships may exist. For example, A and/or B may represent the following three cases: Only A exists, both A and B exist, and only B exists. The character "/" generally indicates that the associated objects are in an "OR" relationship.

In this application, "at least one" means one or more, and "a plurality of" means two or more.

In addition, it should be understood that in the descriptions of this application, terms such as "first" and "second" are only for distinction and description, but cannot be understood as indicating or implying relative importance, or as indicating or implying an order.

The technical solutions in embodiments of this application may be applied to various communication systems. In a communication system, a part operated by an operator may be referred to as a PLMN (or may be referred to as an operator network or the like). The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network that meets a requirement of the 3rd generation mobile communication partner project (3rd generation partnership project, 3GPP) standard, which is referred to as a 3GPP network for short. The 3GPP network usually includes but is not limited to 5G, a 4th-generation (4th-generation, 4G) mobile communication network, and another future communication system such as 6G.

With expansion of a mobile bandwidth access service, mobile networks are developing to better support diversified business models and meet requirements of more diversified application services and industries. For example, to provide better and more comprehensive services for more industries, a network architecture is adjusted for the 5G network relative to the 4G network. For example, in the 5G network, a mobility management entity (mobility management entity, MME) in the 4G network is split into a plurality of network functions including an AMF, an SMF, and the like.

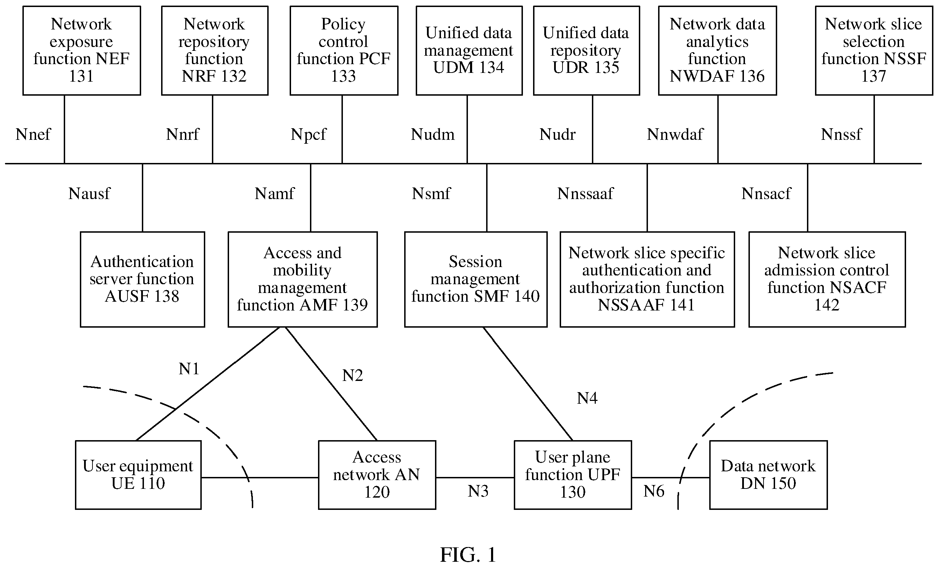

For ease of understanding embodiments of this application, an application scenario used in this application is described by using a 5G network architecture shown in FIG. 1 as an example. FIG. 1 is a schematic diagram of a 5G network architecture. The network architecture may include a user equipment 110 part, a PLMN part, and a data network (data network, DN) 150 part.

The PLMN may include a network exposure function (network exposure function, NEF) 131, a network repository function (network function repository function, NRF) 132, a policy control function (policy control function, PCF) 133, unified data management (unified data management, UDM) 134, unified data repository (unified data repository, UDR) 135, a network data analytics function (network data analytics function, NWDAF) 136, a network slice selection function (network slice selection function, NSSF) 137, an authentication server function (authentication server function, AUSF) 138, an AMF 139, a session management function (session management function, SMF) 140, a network slice specific authentication and authorization function (Network Slice Specific Authentication and Authorization Function, NSSAAF) 141, a network slice admission control function (NSACF) 142, a user plane function (user plane function, UPF) 130, an access network (access network, AN) 120, and the like. In the foregoing PLMN, a part other than the access network 120 may be referred to as a core network part.

The data network DN 150 may also be referred to as a packet data network (packet data network, PDN), and may be deployed in the PLMN, or may be deployed outside the PLMN (for example, a third-party network).

For example, the following briefly describes a network function in the PLMN.

The AN 120, also referred to as a radio (Radio) AN, is a subnet of the PLMN, and is an implementation system between a service node (or network function) in the PLMN and the UE 110. To access the PLMN, the UE 110 first passes through the AN 120, and then is connected to the service node in the PLMN by using the AN 120. The AN 120 in embodiments of this application may refer to an access network itself, or may refer to an access network device. This is not distinguished herein. The access network device is a device that provides a wireless communication function for the UE 110, and may also be referred to as an access device, a (R)AN device, a network device, or the like. It may be understood that a specific type of the access network device is not limited in this application. In systems using different radio access technologies, devices with functions of the access network device may have different names.

Optionally, in some deployments of the access device, the access device may include a CU, a DU, and the like. In some other deployments of the access device, the CU may be further split into a CU-control plane (control plane, CP), a CU-user plane (user plan, UP), and the like. In still some other deployments of the access device, the access device may alternatively be in an open radio access network (open radio access network, O-RAN or Open RAN) architecture or the like. A specific deployment manner of the access device is not limited in this application.

The network exposure function NEF (which may also be referred to as a network exposure functional entity) 131 is a control plane function provided by an operator, and is configured to enable a third party to use a service provided by a network.

The network repository function NRF 132 is a control plane function provided by an operator, and may be configured to maintain real-time information of all network function services in a network.

The policy control function PCF 133 is a control plane function provided by an operator. The PCF 133 supports a unified policy framework to govern network behavior, and provides a policy rule, subscription information related to policy decision, and the like for another control function.

The unified data management UDM 134 is a control plane function provided by an operator, and is responsible for storing information such as an SUPI, a security context (security context), and subscription data of a subscriber in the PLMN.

The unified data repository UDR 135 is a control plane network function provided by the PLMN, and is configured to support repository and extraction of subscription data of an UDM, policy data of a PCF, structured data for openness, application data, and the like.

The network data analytics function NWDAF 136 is a control plane network function provided by the PLMN, and is configured to support a network function (network function, NF), an application function (application function, AF), network management data collection, data openness, analysis, machine learning model training, and the like that are related to network operation.

The network slice selection function NSSF 137 is a control plane network function provided by the PLMN, and is responsible for determining a network slice instance, selecting an AMF, and the like.

The authentication server function AUSF 138 is a control plane function provided by an operator, and is usually used for first-level authentication, that is, network authentication between the UE 110 (a subscriber) and the PLMN.

The access and mobility management function AMF 139 is a control plane network function provided by the PLMN, and is responsible for access control and mobility management when the UE 110 accesses the PLMN, for example, including functions such as mobility status management, temporary user identity allocation, and user authentication and authorization.

The session management function SMF 140 is a control plane network function provided by the PLMN, and is responsible for managing a PDU session of the UE 110. The PDU session is a channel for transmitting a PDU, and a terminal device and the DN 150 needs to transmit data to each other through the PDU session. The SMF 140 may be responsible for establishment, maintenance, deletion, and the like of the PDU session. The SMF 140 includes session-related functions, such as session management (for example, session establishment, modification, and release, including tunnel maintenance between the UPF 130 and the AN 120), selection and control of the UPF 130, service and session continuity (service and session continuity, SSC) mode selection, and roaming.

The network slice specific authentication and authorization function NSSAAF 141 is a control plane network function provided by the PLMN, and is configured to support slice authentication performed between the UE 110 and the DN.

The network slice admission control function NSACF 142 is a network function used by the PLMN to monitor and control a number of UEs registered with a network slice. Generally, a maximum number of UEs that can be served in each network slice monitored and controlled by the NSACF is configured on the NSACF.

The user plane function UPF 130 is a gateway provided by an operator, and is a gateway for communication between the PLMN and the DN 150. The UPF 130 includes user plane-related functions, such as data packet routing and transmission, packet detection, service usage reporting, quality of service (quality of service, QoS) processing, lawful interception, uplink packet detection, and downlink data packet repository.

The network functions in the PLMN shown in FIG. 1 may further include another network function (not shown in the figure). The another network function included in the PLMN is not limited in embodiments of this application.

In FIG. 1, Nnef, Nnrf, Npcf, Nudm, Nudr, Nnwdaf, Nnssf, Nausf, Namf, Nsmf, Nnssaaf, Nnsacf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that interface names between the network functions in FIG. 1 are merely examples. In specific implementation, the interface name of the system architecture may alternatively be another name. This is not limited in this application.

The mobility management network function in this application may be the AMF 139 shown in FIG. 1, or may be another network function having the foregoing access and mobility management function AMF 139 in a future communication system. Alternatively, the mobility management network function in this application may be a mobility management entity (mobility management entity, MME) or the like in an LTE system. It may be understood that the another network function is also applicable.

The schematic diagram of the network architecture shown in FIG. 1 may be understood as a schematic diagram of a service-based 5G network architecture in a non-roaming scenario. In the architecture, different network functions are combined in order based on a requirement in a specific scenario, so that a network capability and a network service can be customized, thereby deploying dedicated networks for different services, and implementing 5G network slicing (network slicing). With a network slicing technology, an operator may be capable of responding to customer requirements more flexibly and quickly and supporting flexible allocation of network resources.

First, a slice in the network device is described.

Slices (slices), namely, network slices, to put it simply, are a plurality of virtual end-to-end networks obtained through slicing a physical network of an operator. These virtual networks (including a device, an access network, a transport network, and a core network in the network) are logically independent, so that a fault occurring on any one of the virtual networks does not affect the remaining of the virtual networks. To meet diversified requirements and slice isolation, independent management and operation and maintenance are required for services, and customized service functions and analysis capabilities are provided. Instances of different service types may be deployed on different network slices, or different instances (instances) of a same service type may also be deployed on different network slices. The slice may include a group of network functions (network functions, NFs) and/or a subnet. For example, the subnet (R)AN 120, the AMF 139, the SMF 140, and the UPF 130 in FIG. 1 may form a slice. It may be understood that only one network function of each type is schematically illustrated in FIG. 1. During actual network deployment, there may be a plurality of, dozens of network functions or subnets of each type. A plurality of slices may be deployed in a PLMN. All slices may have different performance to meet requirements of different applications and vertical industries. The operator may "customize" a slice based on requirements of customers from the different vertical industries.

When UE needs to access a slice in the network, the UE may provide, in an uplink message, a slice that the UE wants to access or indicate, in an uplink message to the core network, a slice that the UE wants to access. The uplink message is a message sent from the UE to the network side, for example, registration request (registration request), service request (service request), and periodic registration update (Periodic Registration Update). For ease of description, the following describes the uplink message as a "request message". Generally, indication information indicating the slice that the UE wants to access is referred to as a requested (requested) "network slice selection assistance information set" (network slice selection assistance information, NSSAI). The NSSAI is actually a list or a set, and includes one or more S-NSSAIs. One S-NSSAI is used to identify one network slice (or may be one network slice type). It may also be understood that the S-NSSAI is identification information of a slice.

In addition, a concept of a network slice instance identifier (Network Slice Instance Identifier/Identity, NSI-ID) is further defined in the standard. A slice identified by one S-NSSAI may be further instantiated into one or more slice instances (slice instances), and each NSI-ID corresponds to one slice instance. In other words, the NSI-ID may also be referred to as identification information of a slice, and one S-NSSAI may alternatively correspond to a plurality of NSI-IDs. In this application, the S-NSSAI is used as an example for description, and the S-NSSAI and the NSI-ID are not strictly distinguished or limited. Descriptions of the S-NSSAI may also be applied to the NSI-ID.

When deploying slices in an operator network (PLMN), the operator may alternatively allow some slice clients to have large autonomy and participate in some management and control functions of the slices. Slice-specific authentication is a network control function with limited slice customer participation. To be specific, authentication and authorization are performed for a slice to which a terminal device is to access, that is, "slice-specific authentication", which may also be referred to as "secondary authentication", "secondary authentication", or the like, and is referred to as "slice authentication" for short in this application.

Before being allowed to access the network slice, the terminal device first needs to perform "network-level authentication" with the PLMN network once, that is, the PLMN needs to perform authentication based on subscription identification information that is used by the terminal device to subscribe to the PLMN. Such authentication is usually referred to as primary authentication (primary authentication). Second, the PLMN needs to perform authentication based on a subscription identifier that is used by the terminal device to subscribe to a DN, that is, "slice authentication".

The NSACF in the foregoing is a network function used by the PLMN to monitor and control a number of terminal devices (or a number of PDU sessions) registered with the network slice. The PLMN may first configure, on one or more NSACFs, a maximum number of terminal devices (or PDU sessions) that can be served in each network slice monitored by the NSACF, or referred to as a quota (Quota). When the network is ready to authorize a new terminal device to access a slice (or allow a new PDU session to be established in a slice), the NSACF first determines, based on a terminal (or PDU session) quota usage status of the slice, whether the network slice can further accept an access request of the terminal device (or a PDU session establishment request of the terminal device), and stores and updates a number of admitted terminals (or a number of established PDU sessions) in the slice in real time. It should be noted that the network slice herein is a network slice that requires admission control (admission control) (or PDU session number control). In the following description, unless otherwise specified, all network slices belong to such slice that requires admission (or PDU session number) control.

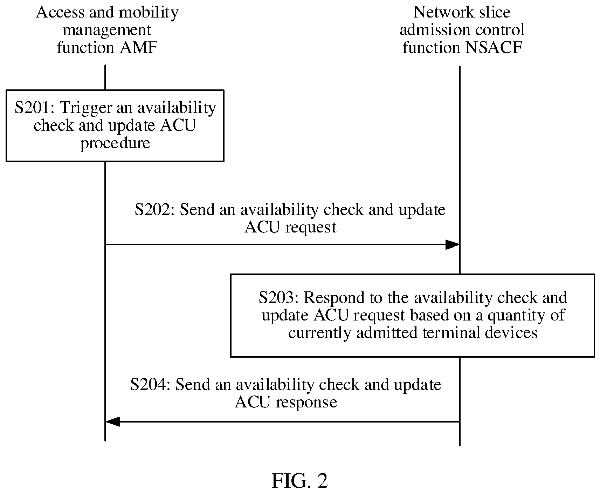

The following uses an example in which an AMF initiates a procedure for updating a number of terminal devices (or terminal device access control) to describe a basic procedure of availability check and update (availability check and update, ACU) of a network slice, which is referred to as an ACU procedure below. It should be noted that the ACU procedure is also applicable to an SMF-initiated procedure for updating a number of PDU sessions. When the ACU procedure is initiated by the SMF and is used to update the number of PDU sessions, the AMF needs to be replaced with an SMF, and descriptions such as the number of terminal devices/access control/access request need to be correspondingly replaced with descriptions such as the number of PDU sessions/session establishment control/session establishment request, and the like. For a slice that requires terminal device admission control, the AMF triggers the ACU procedure and sends an ACU request to an NSACF. With reference to FIG. 2, the following steps are included.

S201: An AMF triggers an ACU procedure.

This procedure may be triggered when the AMF performs procedures such as registration, deregistration, configuration update (UE Configuration Update, UCU), and re-authentication and authorization revocation initiated by a slice authentication server for the terminal device. It should be noted that "when" in embodiments of this application may indicate that before the procedure is performed, during the procedure is performed, or after the procedure is performed. This is uniformly described herein, and details are not described below.

When determining to trigger the ACU procedure, the AMF first verifies that a slice identified as S-NSSAI is a slice that a PLMN allows the terminal device to access. In other words, the AMF verifies that the S-NSSAI is in a "list of allowed NSSAIs" (Allowed NSSAIs) (corresponding to the terminal device). After the verification succeeds, the AMF sends an ACU request for the S-NSSAI to the NSACF, that is, performs S202.

S202: The AMF sends the ACU request to the NSACF.

The NSACF receives the ACU request.

The ACU request may include a UE identifier, an S-NSSAI, an access type (access type), and an update identifier (flag). The update identifier (flag) indicates a request that is of the UE and that is related to the S-NSSAI, and the request is used to request "number increase" (for example, when the UE registers the slice S-NSSAI) or "number decrease" (for example, when the UE deregisters the slice S-NSSAI). It should be noted that when the UE is in a roaming scenario, the S-NSSAI may be an S-NSSAI of a network slice provided by a visited network (that is, a visited PLMN), or may be an S-NSSAI of a home network (home PLMN) that is of the UE and that corresponds to the network slice of the visited network, that is, a mapped S-NSSAI (Mapped S-NSSAI), or may include both the foregoing two types of S-NSSAIs, that is, the S-NSSAI of the visited network and the mapped S-NSSAI of the home network.

S203: The NSACF responds to the ACU request based on a number of currently admitted terminal devices.

The NSACF may update a number of terminals registered with the slice identified as the S-NSSAI.

If the ACU request includes the update identifier (flag) of "number increase", the NSACF checks whether UE corresponding to the UE identifier has been included in a list of admitted UEs. If the UE corresponding to the UE identifier has been included in the list of admitted UEs, a counter of the admitted UEs remains unchanged. If the UE corresponding to the UE identifier has not been included in the list of admitted UEs, the NSACF continues to check whether the number of currently admitted UEs is less than an admission quota of the slice S-NSSAI. If the quota is sufficient (that is, a number of terminals accessing the slice does not reach a maximum number of admitted terminals of the slice), the NSACF adds the UE to the list of admitted UEs and increases a count value of the counter of the admitted UEs by 1. If the quota is full, the counter remains unchanged, and the NSACF sends a response to the AMF, where the response indicates that the slice quota is full.

If the ACU request includes the update identifier (flag) of "number decrease", the NSACF removes the UE identifier from a list of admitted UEs and decreases count values of counters of all slice S-NSSAIs to which the UE is admitted by 1.

S204: The NSACF sends an ACU response to the AMF.

If it is determined that the UE is admitted or removed, the NSACF includes information about number update in the ACU response. If it is determined that the quota is full, the NSACF includes information that slice quota is full in the ACU response.

The AMF may perform corresponding processing based on the received ACU response. For example, when the slice quota is full, the AMF may reject a request of the UE for accessing the slice S-NSSAI, and notify the UE of a rejection cause, where the rejection cause is that the slice quota is full. Optionally, the AMF may further notify the UE to perform request access again after waiting for a period of time (and sending a waiting time period).

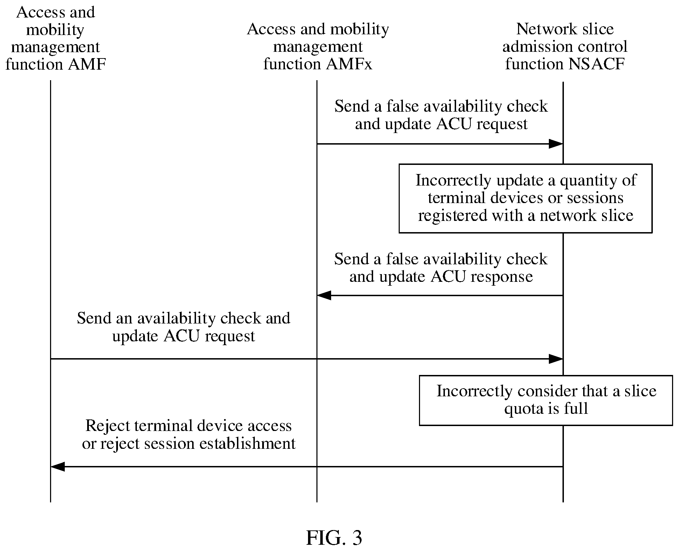

In the foregoing ACU procedure, even if all NFs in the network are authenticated and are legal NFs, there is still a potential risk of being attacked. For example, the NF may send a false message (or an incorrect message) to deceive the NSACF. As a result, the slice cannot provide a service normally or a service is degraded. FIG. 3 is used as an example. An AMFx is an NF that has been maliciously controlled or is controlled by an insider (insider), so that the AMFx sends a false message. The false message may cause the NSACF to incorrectly update the number of terminal devices or PDU sessions registered with the network slice. For example, the NSACF incorrectly considers that the slice quota is full, and consequently when the AMF sends the ACU request, because the slice has no quota, the NSACF rejects UE access or rejects PDU session establishment. As a result, the terminal device cannot normally access the network slice or cannot normally establish the PDU session, and a network slice service is degraded or a service cannot be normally provided.

Based on this, an embodiment of this application provides a communication method. In the method, an admission control network function receives a first message, where the first message includes first parameter information used to update a number of terminal devices or sessions in a first network slice. The admission control network function verifies validity of the first parameter information. If the first parameter information is valid, the admission control network function may update the number of terminal devices or sessions in the first network slice. Herein, the validity of the received first parameter is verified, so that incorrect updating, caused by a false message, on a configuration of a network slice can be reduced, and it is ensured that the terminal device can normally access the network slice or can normally establish the PDU session, thereby improving stability of a service provided by the network slice and improving network security.

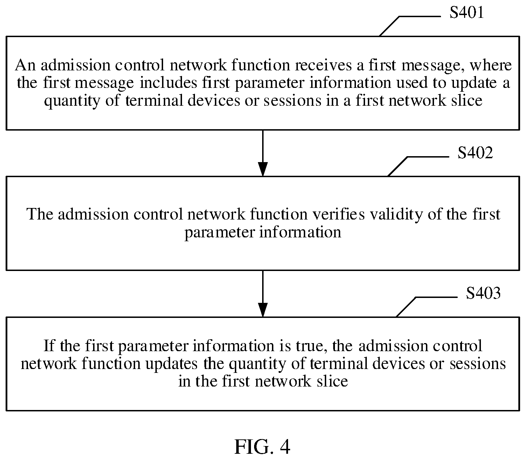

A communication method provided in an embodiment of this application may be applied to a communication system shown in FIG. 1. FIG. 4 shows a possible communication method. The method includes the following steps.

S401: An admission control network function receives a first message.

The admission control network function may be an NSACF in 5G.

The first message includes first parameter information used to update a number of terminal devices or sessions in a first network slice. Optionally, the first message may be an ACU request message.

The first parameter information may include but is not limited to one or more of the following information: a terminal device identifier, an identifier of the first network slice, an access management network function identifier, first indication information for requesting registration or deregistration, second indication information for requesting session establishment or release, a terminal device access type, a session identifier, a data network identifier, a session management network function identifier, or a session status. It should be noted that when the first message is a false message or an incorrect message, the one or more of information in the first parameter information may be false parameter information or incorrect parameter information. For example, in this case, the identifier of the first network slice in the first parameter information is different from a real identifier of a first network slice in a network.

In a possible scenario, an access management network function (for example, an AMF) sends a first message to the admission control network function, and first parameter information is used to update the number of terminal devices in the first network slice.

In another possible scenario, a session management network function (for example, an SMF) sends a first message to the admission control network function, and first parameter information is used to update the number of sessions in the first network slice.

Optionally, the first message is sent when an early admission control mode is inactive and a number of terminal devices that request to access the first network slice reaches a second number threshold. The second number threshold may be any positive integer, and this is not limited herein.

S402: The admission control network function verifies validity of the first parameter information.

A procedure for verifying the validity of the first parameter information may be: matching real parameter information (referred to as second parameter information below) stored in the network with the first parameter information, or verifying consistency between the real parameter information and the first parameter information.

In some possible cases, the false message may include the following false parameters. Therefore, the verification may be performed against these potentially false parameters.

False parameter 1: An unauthorized terminal device identifier is used.

For example, a fake terminal device identifier is used, and the fake terminal device identifier may be a terminal device identifier generated in any manner.

For another example, a real terminal device identifier eavesdropped by an AMFx is used, but the real terminal device identifier has not subscribed to the first network slice.

For another example, a terminal device identifier that has subscribed to a network slice is used, but a serving network (serving network) in which the terminal device identifier is located does not match a serving network to which the NF that sends the first message belongs.

When an NF (for example, an AMFx or an SMFx controlled by an attacker) that sends the terminal device identifier and another NF (for example, an AMF or an SMF of a victim) jointly serve a network slice, the NF that sends the terminal device identifier may falsely report a number of terminal devices or sessions by using a false message (the false parameter 1), so that the admission control network function incorrectly considers that a quota of the network slice is full, and rejects the terminal device to access a network slice or establish a session from the another NF. As a result, the terminal device is attacked by a denial of service (denial of service, DoS).

Therefore, the admission control network function may verify the validity of the terminal device identifier. The terminal device identifier may be a UE ID and/or an internet protocol (internet protocol, IP) address of the UE.

False parameter 2: A network slice that is not subscribed to by the terminal device is used.

For example, a network slice that is not served by the NF that sends the first message is used.

The NF that sends the first message may attack, by sending the false parameter 2, a network slice served by another NF.

Therefore, the admission control network function may verify validity of a network slice identifier. The network slice identifier may be an S-NSSAI.

False parameter 3: Incorrect indication information is used.

For example, a real terminal device identifier and a real network slice identifier are used, but incorrect indication information is used. Indication information used to request number increase is tampered with indication information used to request number decrease, or indication information used to request number decrease is tampered with indication information used to request number increase. The indication information used to request number increase may be indication information used by the terminal device to request registration or request session establishment, and the indication information used to request number decrease may be indication information used by the terminal device to request deregistration or request session release.

The NF that sends the first message directly tampers with indication information in a message of another NF by eavesdropping the message sent by the another NF, and consequently a number of terminal devices or sessions stored in the NSACF is inconsistent with an actual situation. As a result, the terminal device cannot access a network slice, or cannot establish a session, or a network is overloaded and a service is terminated.

Therefore, the admission control network function may verify validity of the indication information, where the indication information may be first indication information (for example, an update identifier (flag 1)) for requesting registration or deregistration, and/or the indication information may be second indication information (for example, an update identifier (flag 2)) for requesting session establishment or release.

False parameter 4: An incorrect access type (access type) is used.

For example, a real terminal device identifier and a network slice identifier are used, but an incorrect service type is used, so that a number of terminal devices or sessions that access the network slice is doubled. A terminal device repeatedly accessing the network slice via a same access type occupies only one number quota. However, the terminal device repeatedly accessing the network slice via different access types occupies a plurality of number quotas. In other words, for the terminal device, each access type occupies one number quota.

The NF that sends the first message directly tampers with an access type in a message of another NF by eavesdropping the message sent by the another NF, and may falsely report a number of terminal devices. When the quota reaches a maximum number, another legal terminal device cannot access the network slice.

Therefore, the admission control network function may verify validity of the access type.

It may be understood that the foregoing several false parameters are merely examples, and constitute no limitation on actually verified parameter information.

In an example, the admission control network function may verify the validity of the first parameter information by itself. In this example, the admission control network function may store real second parameter information.

Optionally, when the admission control network function verifies the validity of the first parameter information, one or more of the following manners may be used.

The admission control network function verifies whether a terminal device corresponding to the terminal device identifier has subscribed to a service of a network to which the first network slice belongs. If the terminal device corresponding to the terminal device identifier subscribes to the service of the network to which the first network slice belongs, it may be determined that the terminal device identifier and/or the identifier of the first network slice are/is valid. If the terminal device corresponding to the terminal device identifier does not subscribe to the service of the network to which the first network slice belongs, it may be determined that the terminal device identifier and/or the identifier of the first network slice are/is false.

The admission control network function verifies whether a terminal device corresponding to the terminal device identifier has subscribed to a service of a home network corresponding to the first network slice. This may be a scenario in which the terminal device roams to a visited network and the first network slice is provided by the visited network. A subscription network of the roamed terminal device is the home network, an identifier of a subscribed network slice is a mapped S-NSSAI, and the identifier has a mapping relationship with an identifier S-NSSAI of the first network slice. Therefore, in the roaming scenario, the admission control network function may verify whether the terminal device has subscribed to the home network. If the terminal device corresponding to the terminal device identifier has subscribed to the service of the home network corresponding to the first network slice, it may be determined that the terminal device identifier and/or the identifier of the first network slice are/is valid. If the terminal device corresponding to the terminal device identifier has not subscribed to the service of the home network corresponding to the first network slice, it may be determined that the terminal device identifier and/or the identifier of the first network slice are/is false.

The admission control network function verifies whether the terminal device has subscribed to a service of the first network slice. If the terminal device has subscribed to the service of the first network slice, it may be determined that the terminal device identifier and/or the identifier of the first network slice are/is valid. If the terminal device has not subscribed to the service of the first network slice, it may be determined that the terminal device identifier and/or the identifier of the first network slice are/is false.

The admission control network function verifies whether the terminal device has subscribed to a service of a network slice of a home network corresponding to the first network slice. If the terminal device has subscribed to the service of the network slice of the home network corresponding to the first network slice, it may be determined that the terminal device identifier and/or the identifier of the first network slice are/is valid. If the terminal device has not subscribed to the service of the network slice of the home network corresponding to the first network slice, it may be determined that the terminal device identifier and/or the identifier of the first network slice are/is false.

The admission control network function verifies whether the terminal device has registered with a network to which the first network slice belongs. If the terminal device has registered with the network to which the first network slice belongs, it may be determined that the terminal device identifier and/or the identifier of the first network slice are/is valid. If the terminal device has not registered with the network to which the first network slice belongs, it may be determined that the terminal device identifier and/or the identifier of the first network slice are/is false.

The admission control network function verifies whether the terminal device has accessed the first network slice. That the terminal device accesses the first network slice may mean that the terminal device receives authorization information that is sent by the network and that is used to allow the terminal device to access the first network slice. For example, an identifier S-NSSAI of the first network slice is in a list of allowed NSSAIs of the terminal device. If the terminal device accesses the first network slice, it may be determined that the terminal device identifier and/or the identifier of the first network slice are/is valid. If the terminal device does not access the first network slice, it may be determined that the terminal device identifier and/or the identifier of the first network slice are/is false.

The admission control network function verifies whether the terminal device has registered with a network by using an access management network function corresponding to the access management network function identifier. If the terminal device has registered with the network by using the access management network function corresponding to the access management network function identifier, it may be determined that the terminal device identifier and/or the access management network function identifier are/is valid. If the terminal device does not register with the network by using the access management network function corresponding to the access management network function identifier, it may be determined that the terminal device identifier and/or the access management network function identifier are/is false.

The admission control network function verifies whether the terminal device has established a session by using a session management network function corresponding to the session management network function identifier. If the terminal device has established the session by using the session management network function corresponding to the session management network function identifier, it may be determined that the terminal device identifier and/or the session management network function identifier are/is valid. If the terminal device does not establish the session by using the session management network function corresponding to the session management network function identifier, it may be determined that the terminal device identifier and/or the session management network function identifier are/is false.

The admission control network function verifies whether the terminal device has accessed the first network slice by using an access management network function. If the terminal device accesses the first network slice by using the access management network function, it may be determined that one or more pieces of parameter information of the terminal device identifier, the access management network function identifier, and the identifier of the first network slice are valid. If the terminal device accesses the first network slice by not using the access management network function, or if the terminal device does not access the first network slice by using the access management network function, it may be determined that one or more pieces of parameter information of the terminal device identifier, the access management network function identifier, and the identifier of the first network slice are false.

The admission control network function verifies whether the terminal device establishes a session of the first network slice by using a session management network function. If the terminal device establishes the session in the first network slice by using the session management network function, it may be determined that one or more pieces of parameter information of the terminal device identifier, the session management network function identifier, and the identifier of the first network slice are valid. If the terminal device does not establish the session in the first network slice by using the session management network function, it may be determined that one or more pieces of parameter information of the terminal device identifier, the session management network function identifier, and the identifier of the first network slice are false.

The admission control network function verifies whether the terminal device has accessed a network via the access type. If the terminal device has accessed the network via the access type, it may be determined that the terminal device identifier and/or the access type are/is valid. If the terminal device does not access the network via the access type, it may be determined that the terminal device identifier and/or the access type are/is false. The access type may include access over a 3GPP network and/or access over a non-3GPP network. The access over a non-3GPP network may include access over a local area network (for example, wireless fidelity (wireless fidelity, Wi-Fi)), access over a fixed network (for example, a fiber-optic network (Fiber-Optic network)), and/or the like.

The admission control network function verifies whether the registration or deregistration request indicated by the first indication information matches a stored registration status of the terminal device. If the registration or deregistration request indicated by the first indication information matches the stored registration status of the terminal device, it may be determined that the first indication information is valid. If the registration or deregistration request indicated by the first indication information does not match the stored registration status of the terminal device, it may be determined that the first indication information is false. For example, if the first indication information is used to request deregistration, but the real registration status of the terminal device stored in the network is unregistered, it may be considered that the deregistration request indicated by the first indication information does not match the stored registration status of the terminal device, and the first indication information is false. However, the first indication information is used to request registration, but the real registration status of the terminal device stored in the network is registered. Because the terminal device is allowed to be re-registered in a current standard, the terminal device occupies only one number quota, and a counter of admitted terminal devices remains unchanged, it may be considered that the registration request indicated by the first indication information matches the stored registration status of the terminal device, and the first indication information is valid. For another example, if the first indication information is used to request deregistration, but the real registration status of the terminal device stored in the network is registered, and the first indication information is used to request registration, but the real registration status of the terminal device stored in the network is unregistered, it may be considered that the registration or deregistration request indicated by the first indication information matches the stored registration status of the terminal device, and the first indication information is valid.

The admission control network function verifies whether the session establishment or release request indicated by the second indication information matches a stored session status of the terminal device. If the session establishment or release request indicated by the second indication information matches the stored session status of the terminal device, it may be determined that the second indication information is valid. If the session establishment or release request indicated by the second indication information does not match the stored session status of the terminal device, it may be determined that the second indication information is false. For example, if the second indication information is used to request session release, but the real session status of the terminal device stored in the network is not established, it may be considered that the session release request indicated by the second indication information does not match the stored real session status, and the second indication information is false. However, the second indication information is used to request session establishment, but the real session status stored in the network is established. Because a plurality of sessions are allowed to be established in a current standard, but the plurality of sessions correspond to a same session identifier, the session occupies only one number quota, and a counter of sessions remains unchanged, it may be considered that the second indication information indicates that the session establishment request matches the stored session status, and the second indication information is valid. For another example, if the second indication information is used to request session release, but the real session status stored in the network is established, and the second indication information is used to request session establishment, but the real session status stored in the network is not established, it may be considered that the session establishment or release request indicated by the second indication information matches the stored session status, and the second indication information is valid.

The admission control network function verifies whether the session identifier (or a session corresponding to the session identifier) exists. If the session identifier (or the session corresponding to the session identifier) exists, it may be determined that the session identifier is valid. If the session identifier (or the session corresponding to the session identifier) does not exist, it may be determined that the session identifier is false. The session identifier may be a PDU session ID.

The admission control network function verifies whether the session identifier (or a session corresponding to the session identifier) belongs to the terminal device. If the session identifier (or the session) belongs to the terminal device, it may be determined that the session identifier and/or the terminal device identifier are/is valid. If the session identifier (or the session) does not belong to the terminal device, it may be determined that the session identifier and/or the terminal device identifier are/is false.

The admission control network function verifies whether the session identifier (or a session corresponding to the session identifier) belongs to the first network slice. If the session identifier or the session belongs to the first network slice, it may be determined that the session identifier and/or the identifier of the first network slice are/is valid. If the session identifier or the session does not belong to the first network slice, it may be determined that the session identifier and/or the identifier of the first network slice are/is false.

The admission control network function verifies whether a session corresponding to the session identifier is managed by a session management network function corresponding to the session management network function identifier. If the session corresponding to the session identifier is managed by the session management network function corresponding to the session management network function identifier, it may be determined that the session identifier and/or the session management network function identifier are/is valid. If the session corresponding to the session identifier is not managed by the session management network function corresponding to the session management network function identifier, it may be determined that the session identifier and/or the session management network function identifier are/is false.

The admission control network function verifies whether the session status is consistent with a current status of the session. If the session status is consistent with the current session status, it may be determined that the session status is valid. If the session status is inconsistent with the current session status, it may be determined that the session status is false.

The admission control network function verifies whether the first network slice matches a data network corresponding to the data network identifier. If the first network slice matches the data network corresponding to the data network identifier, it may be determined that the identifier of the first network slice and/or the data network identifier are/is valid. If the first network slice does not match the data network corresponding to the data network identifier, it may be determined that the identifier of the first network slice and/or the data network identifier are/is false. The data network identifier may be a data network name (data network name, DNN) and/or a data network access identifier (data network access identifier, DNAI).

In a possible implementation, before verifying the validity of the first parameter information, the admission control network function may send a second message to a data management network function (for example, a UDM and/or a UDR), where the second message is used to request second parameter information, and the second parameter information is used to verify the validity of the first parameter information; and receive a third message, where the third message includes the second parameter information. In this implementation, the admission control network function may not store real second parameter information.

In another example, the admission control network function may request another network function to verify the validity of the first parameter information. For example, the another network function may be a data management network function (for example, a UDM and/or a UDR). The admission control network function may send a second message to the data management network function, where the second message is used to request to verify the first parameter information. The data management network function sends a third message to the admission control network function, where the third message includes a verification result of the first parameter information, and the verification result includes that the first parameter information is valid or false. In this example, the admission control network function may not store real second parameter information.

The data management network function verifies the first parameter information based on obtained second parameter information about a terminal device or a session.

The second message may include one or more of the following information: a terminal device identifier, indication information for verifying a subscription status of the terminal device, indication information for verifying an access status of the terminal device, an identifier of the first network slice, an identifier of a slice corresponding to the first network slice in a home network, an access management network function identifier, first indication information for requesting registration or deregistration, second indication information for requesting session establishment or release, a terminal device access type, a session identifier, a data network identifier, a session management network function identifier, or a session status.

Optionally, when the data management network function verifies the first parameter information based on the obtained second parameter information of a terminal device or a session, one or more of the following manners may be used.

The data management network function verifies the subscription status of the terminal device based on the indication information for verifying the subscription status of the terminal device. The subscription status of the terminal device may be a status of whether the terminal device has subscribed to a service of a network to which the first network slice belongs, or may be a status of whether the terminal device has subscribed to a service of a home network corresponding to the first network slice, or may be whether the terminal device has subscribed to a service of the first network slice, or may be a service of a network slice of a home network corresponding to the first network slice.

The data management network function verifies whether a terminal device corresponding to the terminal device identifier has subscribed to a service of a network to which the first network slice belongs. If the terminal device corresponding to the terminal device identifier subscribes to the service of the network to which the first network slice belongs, it may be determined that the terminal device identifier and/or the identifier of the first network slice are/is valid. If the terminal device corresponding to the terminal device identifier does not subscribe to the service of the network to which the first network slice belongs, it may be determined that the terminal device identifier and/or the identifier of the first network slice are/is false.

The data management network function verifies whether the terminal device has subscribed to a service of the first network slice. If the terminal device has subscribed to the service of the first network slice, it may be determined that the terminal device identifier and/or the identifier of the first network slice are/is valid. If the terminal device has not subscribed to the service of the first network slice, it may be determined that the terminal device identifier and/or the identifier of the first network slice are/is false.

The data management network function verifies whether the terminal device has subscribed to a service of a network slice of a home network corresponding to the first network slice. If the terminal device has subscribed to the service of the network slice of the home network corresponding to the first network slice, it may be determined that the terminal device identifier and/or the identifier of the first network slice are/is valid. If the terminal device has not subscribed to the service of the network slice of the home network corresponding to the first network slice, it may be determined that the terminal device identifier and/or the identifier of the first network slice are/is false.

The data management network function verifies the access status of the terminal device based on the indication information for verifying the access status of the terminal device. The access status of the terminal device may be whether the terminal device has registered with a network to which the first network slice belongs, or may be whether the terminal device has accessed the first network slice.

The data management network function verifies whether the terminal device has registered with a network to which the first network slice belongs. If the terminal device registers with the network to which the first network slice belongs, it may be determined that one or more pieces of parameter information of the terminal device identifier, the identifier of the first network slice, and the slice identifier of the home network corresponding to the first network slice are valid. If the terminal device does not register with the network to which the first network slice belongs, it may be determined that one or more pieces of parameter information of the terminal device identifier, the identifier of the first network slice, and the slice identifier of the home network corresponding to the first network slice are false.

The data management network function verifies whether the terminal device has accessed the first network slice. If the terminal device accesses the first network slice, it may be determined that the terminal device identifier and/or the identifier of the first network slice are/is valid. If the terminal device accesses the first network slice, it may be determined that the terminal device identifier and/or the identifier of the first network slice are/is false.

The data management network function verifies whether the terminal device has registered with a network by using an access management network function corresponding to the access management network function identifier. If the terminal device has registered with the network by using the access management network function corresponding to the access management network function identifier, it may be determined that the terminal device identifier and/or the access management network function identifier are/is valid. If the terminal device does not register with the network by using the access management network function corresponding to the access management network function identifier, it may be determined that the terminal device identifier and/or the access management network function identifier are/is false.

The data management network function verifies whether the terminal device has established a session by using a session management network function corresponding to the session management network function identifier. If the terminal device has established the session by using the session management network function corresponding to the session management network function identifier, it may be determined that the terminal device identifier and/or the session management network function identifier are/is valid. If the terminal device does not establish the session by using the session management network function corresponding to the session management network function identifier, it may be determined that the terminal device identifier and/or the session management network function identifier are/is false.

The data management network function verifies whether the terminal device has accessed the first network slice by using an access management network function. If the terminal device accesses the first network slice by using the access management network function, it may be determined that one or more pieces of parameter information of the terminal device identifier, the access management network function identifier, and the identifier of the first network slice are valid. If the terminal device accesses the first network slice by not using the access management network function, or if the terminal device does not access the first network slice by using the access management network function, it may be determined that one or more pieces of parameter information of the terminal device identifier, the access management network function identifier, and the identifier of the first network slice are false.

The data management network function verifies whether the terminal device establishes a session of the first network slice by using a session management network function. If the terminal device establishes the session in the first network slice by using the session management network function, it may be determined that one or more pieces of parameter information of the terminal device identifier, the session management network function identifier, and the identifier of the first network slice are valid. If the terminal device does not establish the session in the first network slice by using the session management network function, it may be determined that one or more pieces of parameter information of the terminal device identifier, the session management network function identifier, and the identifier of the first network slice are false.

The data management network function verifies whether the terminal device has accessed a network via the access type. If the terminal device has accessed the network via the access type, it may be determined that the terminal device identifier and/or the access type are/is valid. If the terminal device does not access the network via the access type, it may be determined that the terminal device identifier and/or the access type are/is false.

The data management network function verifies whether the registration or deregistration request indicated by the first indication information matches a stored registration status of the terminal device. If the registration or deregistration request indicated by the first indication information matches the stored registration status of the terminal device, it may be determined that the first indication information is valid. If the registration or deregistration request indicated by the first indication information does not match the stored registration status of the terminal device, it may be determined that the first indication information is false.

The data management network function verifies whether the session establishment or release request indicated by the second indication information matches a stored session status of the terminal device. If the session establishment or release request indicated by the second indication information matches the stored session status of the terminal device, it may be determined that the second indication information is valid. If the session establishment or release request indicated by the second indication information does not match the stored session status of the terminal device, it may be determined that the second indication information is false.

The data management network function verifies whether the session identifier (or a session corresponding to the session identifier) exists. If the session identifier exists, it may be determined that the session identifier is valid. If the session identifier does not exist, it may be determined that the session identifier is false.

The data management network function verifies whether the session identifier (or a session corresponding to the session identifier) belongs to the terminal device. If the session identifier (or the session corresponding to the session identifier) belongs to the terminal device, it may be determined that the session identifier and/or the terminal device identifier are/is valid. If the session identifier (or the session corresponding to the session identifier) does not belong to the terminal device, it may be determined that the session identifier and/or the terminal device identifier are/is false.

The data management network function verifies whether the session identifier or a session corresponding to the session identifier belongs to the first network slice. If the session identifier (or the session corresponding to the session identifier) belongs to the first network slice, it may be determined that the session identifier and/or the identifier of the first network slice are/is valid. If the session identifier (or the session corresponding to the session identifier) does not belong to the first network slice, it may be determined that the session identifier and/or the identifier of the first network slice are/is false.

The data management network function verifies whether a session corresponding to the session identifier is managed by a session management network function corresponding to the session management network function identifier. If the session corresponding to the session identifier is managed by the session management network function corresponding to the session management network function identifier, it may be determined that the session identifier and/or the session management network function identifier are/is valid. If the session corresponding to the session identifier is not managed by the session management network function corresponding to the session management network function identifier, it may be determined that the session identifier and/or the session management network function identifier are/is false.

The data management network function verifies whether the session status is consistent with a current status of the session. If the session status is consistent with the current session status, it may be determined that the session status is valid. If the session status is inconsistent with the current session status, it may be determined that the session status is false.

The data management network function verifies whether the first network slice matches a data network corresponding to the data network identifier. If the first network slice matches the data network corresponding to the data network identifier, it may be determined that the identifier of the first network slice and/or the data network identifier are/is valid. If the first network slice does not match the data network corresponding to the data network identifier, it may be determined that the identifier of the first network slice and/or the data network identifier are/is false.

If the first parameter information includes one or more types of information, it may be determined that the first parameter information is valid when any type of information is valid. If one type of information is false, it may be determined that the first parameter information is false.

Optionally, when determining that a first condition is satisfied, the admission control network function performs S402, to avoid increasing processing load of the NF and affecting processing efficiency of the NF because a large amount of first parameter information received simultaneously or in a short time is frequently verified. That a first condition is satisfied includes one or more of the following: duration of a timer reaches first duration, a number of times of receiving the first message reaches a first count threshold, a number of accessed terminal devices or sessions reaches a first number threshold, and indication information for triggering verification is received (for example, third indication information). For example, for time triggering, a timer may be preset in the admission control network function, and the timer triggers, based on a specified time interval, to verify the received first parameter information, that is, the duration of the timer reaches the first duration. For another example, for time number triggering, a counter may be preset in the admission control network function, to count the received first message and verify the first parameter information based on a specified time number interval, that is, the number of times of receiving the first message reaches the first count threshold. For another example, based on a number of admitted terminal devices or sessions, a counter in the admission control network function counts a number of admitted terminal devices or sessions, and verifies the first parameter information each time a specific number of terminal devices or sessions is admitted, that is, the number of admitted terminal devices or sessions reaches the first number threshold. For another example, when receiving indication information for triggering verification from another NF, the admission control network function verifies the received first parameter information. The another NF may be an NWDAF or a service operations administration and management network function (operations administration and management, OAM). A value of the first duration is any positive number, and this is not limited herein. The first count threshold may be any positive integer, and this is not limited herein. The first number threshold may be any positive integer, and this is not limited herein. The first number threshold and the second number threshold may be the same or may be different. It may be understood that the counter in embodiments of this application may be used for positive counting or countdown counting, and the timer may be used for positive timing or countdown timing.

S403: If the first parameter information is valid, the admission control network function updates the number of terminal devices or sessions in the first network slice.

If the first parameter information is false, the admission control network function performs processing based on that the quota of the first network slice is insufficient. Optionally, the admission control network function may notify the OAM that an abnormal event exists.

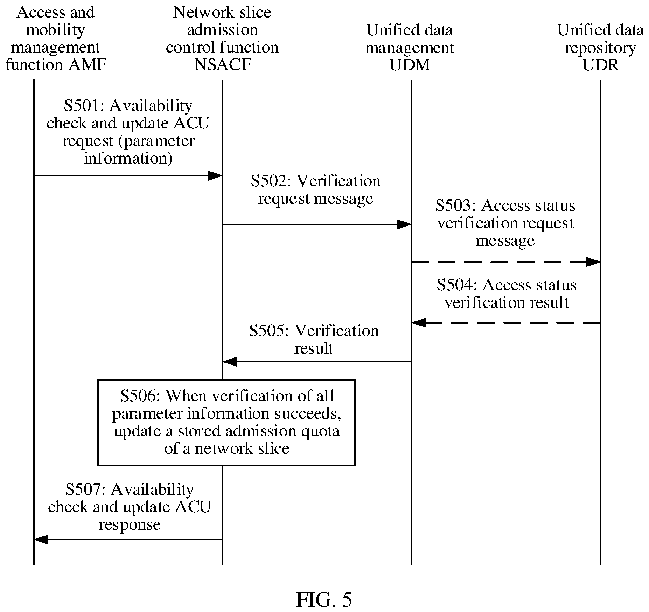

The following uses an example in which the first parameter information is used to update the number of terminal devices in the first network slice for description. Refer to FIG. 5. The following steps are included.

S501: An AMF sends an ACU request to an NSACF.

The ACU request includes parameter information such as a terminal device identifier UE ID, an identifier S-NSSAI of a first network slice, a flag of first indication information, and an access type (access type).

Optionally, the AMF and the NSACF may interact with each other based on a service-based interface (service-based interface, SBI). The AMF may further include a token (token) in the ACU message for the NSACF to verify an identity of the AMF, and the token may further include an AMF ID.

Optionally, the identifier S-NSSAI of the first network slice may be an identifier of a first network slice of a home network of the terminal device, or may be a slice identifier of a network slice of a visited network of the terminal device. Optionally, the identifier of the first network slice may alternatively include identifiers of two first network slices. One is a slice identifier S-NSSAI of a visited network, and the other is a slice identifier of a home network corresponding to the visited network, that is, a mapped S-NSSAI.

S502: The NSACF sends a verification request message to a UDM.

Optionally, the NSACF and the UDM may first perform authentication and authorization on each other based on the SBI by using an NRF, and the NSACF and the UDM may interact with each other in authentication and authorization.

The subscription verification request message is used to request the UDM to verify validity of the first parameter information, to determine whether parameter forgery exists in the first parameter information.

The subscription verification request message may include the UE ID. Optionally, the subscription verification request message may further include one or more of the following: indication information for verifying a subscription status of the UE, indication information for verifying an access status of the UE, one or more S-NSSAIs, an AMF ID, and the like. It should be noted that the "one or more S-NSSAIs" in this application may include S-NSSAIs of one or more visited networks, or S-NSSAIs of one or more home networks, include S-NSSAIs of one or more visited networks and S-NSSAIs of one or more home networks, or include S-NSSAIs of one or more visited networks and a mapped S-NSSAI of a corresponding home network. The foregoing case is not particularly limited in this application. This is also applicable in the following description, and details are not described again.

The AMF ID identifies the AMF that sends the ACU request message to the NSACF in step S501. Optionally, the NSACF may obtain the AMF ID from the token in the ACU request message. It should be noted that how the NSACF obtains the AMF ID is not limited in this application.

If the subscription verification request message includes the indication information for verifying a subscription status of the UE, the subscription verification request message may further include at least the UE ID. Optionally, the subscription verification request message may further include one or more S-NSSAIs.

If the subscription verification request message includes the indication information for verifying an access status of the UE, the subscription verification request message may further include at least the UE ID. Optionally, the subscription verification request message may further include one or more of the following: one or more S-NSSAIs, an AMF ID, and an access type of the UE.

If the subscription verification request message does not include the indication information for verifying a subscription status of the UE or/and the indication information for verifying an access status of the UE, the UDM may indicate verification of the one or two statuses by default, or the UDM may configure to perform verification on one of the statuses by default or pre-specify to perform verification on one of the statuses.

Alternatively, the UDM may determine, based on the first parameter information included in the subscription verification request message, the first parameter information that needs to be verified. For example, the subscription verification request message includes the access type and the AMF ID, and the UDM determines that the access type and the access status (access from which AMF or network) of the terminal need to be verified.

In a possible case, the UDM stores subscription data of the UE, but does not store the access status of the UE. In this case, the UDM may request a UDR to verify the access status of the UE, and perform S503. It may be understood that the UDM may verify the subscription status and/or the access status of the UE, and the UDR may also verify the subscription status and/or the access status of the UE.

Optionally, in S503, the UDM sends an access status verification request message to the UDR.

Optionally, in S504, the UDR sends an access status verification result to the UDM.

It may be understood that the access status verification request message sent by the UDM may be used to obtain the access status in the UDR. Correspondingly, the access status verification result includes the access status stored in the UDR. Alternatively, the access status verification request sent by the UDM may be used to request the UDR to verify the access status. Correspondingly, the access status verification result includes a verification result of the access status determined by the UDR.

When S503 and S504 are not performed, the UDM may perform the following operations: If the UDM determines to verify the subscription status of the UE, the UDM may obtain the UE ID from the NSACF (for example, the message in step 502), and check the subscription data that is of the UE and that is stored in the UDM. The subscription data includes UE that has subscribed to a network. The UDM may determine, based on the UE ID, whether to-be-checked UE corresponding to the UE ID is a subscribed user, that is, the UDM may verify whether the UE ID is a real UE ID, that is, whether the UE ID is subscribed UE or legal UE.

Optionally, the subscription data stored in the UDM may further include information about a slice to which the UE subscribes. For example, the information about the slice to which the UE subscribes may be included in a "Subscribed S-NSSAIs" information element (information element, IE) of the UDM. For example, if the UE has subscribed to two slices, the UDM may list a list of slice identifiers S-NSSAIs to which the corresponding UE has subscribed, including an S-NSSAI-1 and an S-NSSAI-2. If the subscription verification request message of the NSACF received by the UDM includes the S-NSSAI-1 and an S-NSSAI-3, the UDM may determine that the S-NSSAI-1 passes the verification (the UE has subscribed to the slice) and the S-NSSAI-3 does not pass the verification (the UE has not subscribed to the slice). Optionally, when the UE roams to a visited network, the UDM is a UDM in a home network of the UE.

When S503 and S504 are performed, the UDM does not necessarily store all status information of the UE. In this case, the UDM may perform the following operations.

When whether a serving network accessed by the UE is consistent with a serving network accessed by the subscribed UE needs to be verified, and if the NSACF includes, in the subscription verification request message, an AMF ID that needs to be verified, the UDM may determine, based on the AMF ID, a network to which the AMF belongs (that is, a PLMN ID to which the AMF belongs). For example, the PLMN ID is a PLMN-4. The UDM may determine, based on the slice identifier S-NSSAI subscribed by the UE, a PLMN network to which the S-NSSAI belongs. For example, the S-NSSAI-1 subscribed by the UE belongs to a PLMN-1, and the S-NSSAI-2 subscribed by the UE belongs to a PLMN-2. The UDM determines, by comparing PLMN IDs, that the PLMN-4 is separately different from the PLMN-1 and the PLMN-2. Therefore, it may be determined that the AMF is inconsistent with the slice information subscribed by the UE, and the verification fails.

When whether an AMF in the subscription verification request message is consistent with the AMF accessed by the UE needs to be verified, the UE performs primary authentication by using an AMF of an accessed serving network (the serving network is a visited network accessed by the UE when the UE is roaming or a home network accessed by the UE when the UE is not roaming) before accessing the slice, and generates a related key. The AMF ID is stored in the UDM or the UDR. Therefore, the UDM may compare the stored AMF ID that serves the UE (the UE that performs primary authentication by using the AMF) with the AMF ID in the subscription verification request message. If the stored AMF ID that serves the UE is consistent with the AMF ID in the subscription verification request message, the verification succeeds; otherwise, the verification fails. Similarly, the PLMN ID may also be verified by comparing whether a current PLMN ID that is of the UE (the UE that performs primary authentication by using the PLMN) and that is stored in the UDM is the same as the PLMN ID corresponding to the AMF in the subscription verification request message. It should be noted that, if the UDM does not store related information, the UDM may obtain the information by using the UDR, that is, send the access status verification request message to the UDR by performing S503. A plurality of IEs in the UDR store information about the PLMN ID. For example, an IE "UE current PLMN" ("UE Current PLMN") includes the current PLMN ID, and an IE "UE roaming status" ("UE Roaming status") includes whether a PLMN ID of a serving network to which the UE currently roams is a home network (home PLMN). In embodiments, which IE in the UDR is used to obtain the information about the current PLMN or AMF is not limited.

When whether the access type in the subscription verification request message is consistent with an access type of the subscribed UE needs to be verified, the UDR stores a current access type (3GPP access or non-3GPP access) of the UE. If the subscription verification request message includes the access type of the terminal device, it indicates that the access type needs to be verified. The UDM may send the access status verification request message to the UDR by using S503. Whether the access type stored in the UDR is consistent with the access type in the subscription verification request message is determined. If the access type stored in the UDR is consistent with the access type in the subscription verification request message, it is determined that the verification succeeds; otherwise, it is determined that the verification fails.

When whether a flag in the subscription verification request message is consistent with a registration status of the subscribed UE needs to be verified, the UDR stores a current registration status of the UE, and the current registration status of the UE may be used to verify validity of a registration status indicated by the flag in the subscription verification request message. For example, the UDR further stores a "registration status" IE related to UE access ("UE registration state"). This IE indicates whether a current status of the UE is "Registered" ("Registered") or "Deregistered" ("Deregistered"). When the UE is in the "deregistered" state, it indicates that the UE does not access any slice and does not occupy an admission quota of any slice. If the flag in the subscription verification request message is set to "-" (that is, reducing an admission quota), which is inconsistent with the current registration status of the UE, after the UDM obtains the registration status of the UE from the UDR, it can be verified that verification of the "-" flag information in the subscription verification request message fails.

S505: The UDM sends the verification result to the NSACF.

S506: When verification of all parameter information succeeds, the NSACF updates the stored admission quota of the network slice.

If verification of the parameter information fails, optionally, the NSACF performs processing based on a situation that the network slice has no admission quota, or notifies a network management function or an entity OAM, for example, that an abnormal event exists.

S507: The NSACF sends an ACU response to the AMF.

For S507, refer to S204.

It should be noted that all or some procedures for verifying the parameter information may be implemented by the NSACF, or may be implemented by the UDM, or may be implemented by the UDR. For example, when a procedure for verifying the parameter information is implemented by the NSACF, in S505, the UDM sends second parameter information instead of the verification result to the NSACF, and the second parameter information is used to verify whether the first parameter information is valid. In this implementation, the admission control network function may not store real second parameter information. For another example, when a procedure for verifying the status information of the UE is implemented by the UDM, in S504, the UDR sends second parameter information instead of the verification result to the UDM, and the information is used to verify the status of the UE.

It should be noted that, in the foregoing embodiment, the AMF is used as an example to interact with the NSACF to control the number of UEs in the slice. The same method is also applicable to an ACU procedure for interaction between the SMF and the NSACF. This procedure is used to control a number of PDUs in a slice. When the interaction is used to control the number of PDUs, the UDM and the UDR store parameters of a related PDU session for verification. In other words, the first parameter information for verification needs to be replaced with first parameter information of the related PDU session. For example, the UDM stores a PDU session that has been established by the UE, a PDU session identifier (PDU Session ID), a DN name (DNN), and an SMF ID (for example, an SMF IP address or an SMF NF ID). For another example, the UDR stores a PDU session that has been established by the UE, a UE IP address (UE IP Address), a PDU session status (PDU Session status), a DN access ID (DN access identifier, DNAI), and the like. Similar verification may be performed, that is, verification is performed on these parameters one by one as the first parameter information in step 502. Details are not described herein again.

In the method, an admission control network function receives a first message, where the first message includes first parameter information used to update a number of terminal devices or sessions in a first network slice. The admission control network function verifies validity of the first parameter information. If the first parameter information is valid, the admission control network function may update the number of terminal devices or sessions in the first network slice, or if the first parameter information is false, it indicates that the first parameter information is forged incorrect information, the admission control network function does not update the number of terminal devices or sessions in the first network slice. Herein, the validity of the received first parameter is verified, so that incorrect updating, caused by a false message, on a configuration of a slice can be reduced, and it is ensured that the terminal device can normally access the network slice or can normally establish the PDU session, thereby improving stability of a service provided by the network slice and improving network security.

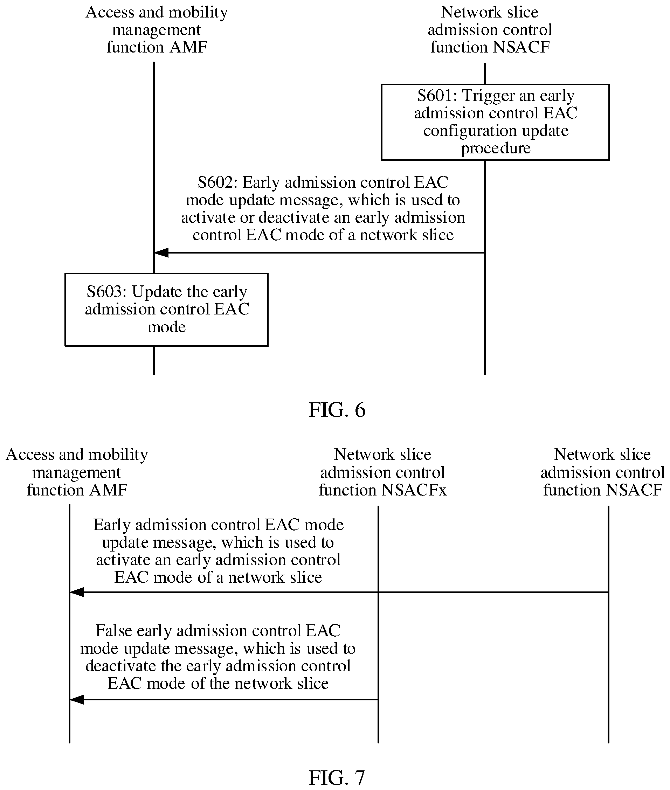

The following first describes a basic procedure for performing the early admission control (early admission control, EAC) mode. The EAC mode is used to indicate a time at which an ACU procedure is performed. When the EAC mode is activated (active), an AMF needs to first perform the ACU procedure before authorizing UE to access a network slice to confirm that a quota of the network slice is not full and allow the UE to access the network slice. When the EAC mode is not activated (inactive), the AMF may perform the ACU procedure after authorizing the UE to access the network slice. Generally, the network slice has a sufficient quota, and a number of terminal devices or sessions accessed by the network slice is not updated in a hurry, so that another procedure of the UE may be preferentially performed. With reference to FIG. 6, the following steps are included.

S601: An NSACF triggers an EAC configuration update procedure.

For example, when a number of terminal devices that access a network slice reaches a specific number (for example, the number of terminal devices is greater than or less than a preset number threshold), the NSACF triggers the EAC configuration update procedure.

S602: The NSACF sends an EAC mode update message to an AMF, where the EAC mode update message is used to activate or deactivate an EAC mode of the network slice.

For example, when the number of terminal devices that access the network slice is less than a preset number threshold (for example, less than a 50% quota), the NSACF deactivates the EAC mode of the network slice, and does not need to initiate an ACU procedure before authorizing UE. When the number of terminal devices that access the network slice is greater than the preset number threshold (for example, greater than a 75% quota), the NSACF activates the EAC mode of the network slice, and needs to initiate the ACU procedure before authorizing the UE, to ensure that the network slice has a sufficient quota for the UE to access.

S603: The AMF updates the EAC mode.

The AMF may further initiate the ACU procedure before or after authorizing the UE based on a configuration.

Even if all NFs in a network are authenticated and are legal NFs, there is still a potential risk of being attacked. For example, when the EAC is not activated, the AMF does not need to initiate the ACU procedure before the UE is authorized to access the network slice. In this case, if the AMF is allowed to authorize a large number of UEs simultaneously or in a short time, the number of UEs may increase sharply, and a risk that the number of UEs exceeds a configuration of the network slice may be caused. When a plurality of AMFs serve a same network slice, the risk is more serious. FIG. 7 is used as an example. An NSACFx is an NF that has been maliciously attacked or is controlled by an insider, so that the NSACFx sends a false message. The false message may tamper with the EAC mode. For example, when an EAC flag is set to deactivated or inactive, the foregoing risk is more likely to occur.

Based on this, an embodiment of this application provides another communication method. In the method, when an early admission control mode is inactive, if a number of terminal devices that request to access a first network slice reaches a second number threshold, an access management network function sends a first message to an admission control network function, to update the number of terminal devices in the first network slice. This can reduce a risk of authorizing, when the early admission control mode is in the inactive state, an excessive number of terminal devices to access the network slice, and improve stability of providing a service by the network slice.

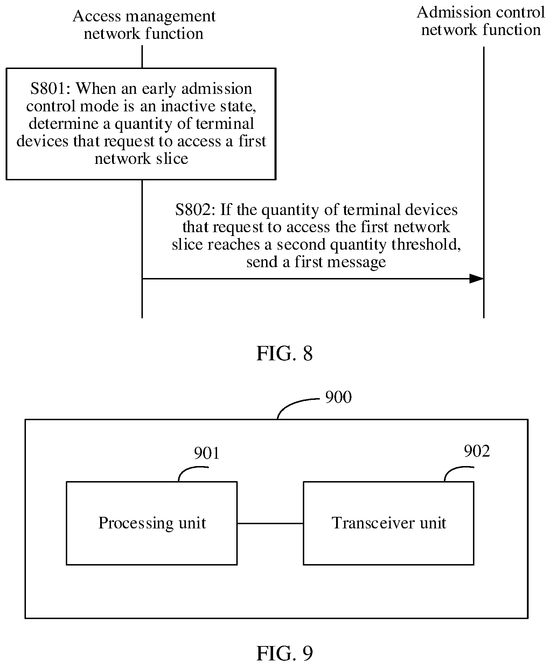

A communication method provided in an embodiment of this application may be applied to a communication system shown in FIG. 1. FIG. 8 shows a possible communication method. The method includes the following steps.

S801: When an early admission control mode is inactive, an access management network function determines a number of terminal devices that request to access a first network slice.

A counter is preset in the AMF. After an ACU procedure is initiated, the AMF may update a count value of the counter when an access request from the terminal device to the first network slice, for example, increasing the count value by a specified value. The specified value is any integer. This is not limited in this embodiment of this application. For example, the specified value may be 1.

S802: If the number of terminal devices that request to access the first network slice reaches a second number threshold, the access management network function sends a first message to an admission control network function.

Correspondingly, the admission control network function receives the first message.

The second number threshold may be set in the terminal device. The second number threshold may be any integer. This is not limited in this embodiment of this application. The first number threshold and the second number threshold may be the same or may be different. The second number threshold may be a value preset in a system, or may be a value obtained through updating based on an early admission control configuration update procedure, or may be a value determined by the access management network function. If the second number threshold is obtained through updating based on the early admission control configuration update procedure, when sending an early admission control mode update message, the admission control network function may add indication information of the second number threshold to the early admission control mode update message. If the access management network function determines the second number threshold, the access management network function may determine the second number threshold based on a remaining admission quota of the network slice and/or a number of access management network functions. Certainly, another manner of determining the second number threshold is not limited in this embodiment of this application.

The second number threshold may be an upper limit of a maximum number of terminal devices that can be admitted by the access management network function between two ACU procedures. If the number of terminal devices that request to access the first network slice reaches the second number threshold, the ACU procedure needs to be first performed, and the first message is sent to the admission control network function. The first message is used to update the number of terminal devices in the first network slice, or is used to reject an access request from the terminal device to the first network slice. It may be understood that, when the early admission control mode is the inactive state, a condition for triggering the ACU procedure is additionally added to the access management network function.

Optionally, the admission control network function may further send a fourth message, and the access management network function receives the fourth message. The fourth message is used to modify the early admission control mode to the inactive state, and the access management network function verifies the fourth message. If the verification succeeds, the access management network function determines that the early admission control mode is the inactive state. According to the verification procedure, when the fourth message passes the verification, the access management network function may determine that the early admission control mode is not maliciously modified. When the fourth message does not pass the verification, the access management network function may determine that the early admission control mode is maliciously modified, and an attack risk is identified.

The fourth message may include but is not limited to one or more of the following: an admission control network function identifier, an identifier of an operator network in which the admission control network function is located, and an identifier of the first network slice. When the access management network function verifies the fourth message, the access management network function may verify one or more of the admission control network function identifier (NSACF ID), the identifier (PLMN ID) of the operator network in which the admission control network function is located, or the identifier (S-NSSAI) of the first network slice. It should be noted that the foregoing identifiers in the fourth message are usually included in a token, for example, included in a claim (Claim) of the token. Information in the token is integrity-protected. If an attacker tampers with the information in the token, the verification fails.

It should be noted that, if UE is roaming, the S-NSSAI in the fourth message (for example, in the token) may be an S-NSSAI of a serving network (that is, a visited network) PLMN, or may be a mapped network slice identifier (mapped S-NSSAI), that is, an S-NSSAI in a home network. The PLMN ID (that is, an ID of the visited network) and the mapped S-NSSAI (the S-NSSAI of the home network) can more accurately determine the admission control network function. Because an S-NSSAI (mapped S-NSSAI) of a home network may be mapped to S-NSSAIs in different PLMNs, there is still a risk of being forged when only the mapped S-NSSAI information is included. In this way, the risk can be reduced by verifying the PLMN and the network slice identifier (the serving S-NSSAI and/or the mapped S-NSSAI).

Optionally, a procedure for verifying the fourth message may be performed after S602, and if the verification succeeds, S603 is performed.

In the method, when the early admission control mode is the inactive state, if the number of terminal devices that request to access the first network slice reaches the second number threshold, the access management network function sends the first message to the admission control network function, to update the number of terminal devices in the first network slice. This can reduce the risk of authorizing, when the early admission control mode is in the inactive state, the excessive number of terminal devices to access the network slice, improve stability of providing the service by the network slice, and improve network security.

It should be noted that the steps in FIG. 7 and FIG. 8 are also applicable to session number control, and the admission control network function AMF needs to be replaced with a session management function SMF. The information in the corresponding token may be correspondingly added or replaced with information about a related session. This is not described herein again.

In embodiments of this application, if there is no special description or logical conflict, and terms and/or descriptions in different embodiments are consistent and may be mutually referenced, technical features in the different embodiments may be combined to form a new embodiment based on an internal logical relationship.

In addition, embodiments of this application are also applicable to an information verification scenario in which other SBI-based NFs interact with each other. The other NFs and to-be-verified information may be different from the NF and the first parameter information in the foregoing embodiments. A verification procedure is similar to that in the foregoing embodiments. Details are not described herein again.

Based on a same technical concept as the foregoing communication method, an embodiment of this application further provides a communication apparatus. As shown in FIG. 9, a communication apparatus 900 includes a processing unit 901 and a transceiver unit 902, and the communication apparatus 900 may be configured to implement the methods described in the foregoing method embodiments. The apparatus 900 may be applied to an admission control network function, a data management network function, or an access management network function, or located in the admission control network function, the data management network function, or the access management network function. Optionally, a function implemented by the transceiver unit 902 may be implemented by a communication interface.

In a possible embodiment, when the apparatus 900 is the admission control network function, the transceiver unit 902 is configured to receive a first message, where the first message includes first parameter information used to update a number of terminal devices or sessions in a first network slice; and the processing unit 901 is configured to: verify validity of the first parameter information, and if the first parameter information is valid, update the number of terminal devices or sessions in the first network slice.

The first parameter information includes one or more of the following information: a terminal device identifier, an identifier of the first network slice, an access management network function identifier, first indication information for requesting registration or deregistration, second indication information for requesting session establishment or release, a terminal device access type, a session identifier, a data network identifier, a session management network function identifier, or a session status.

In an implementation, the processing unit 901 is specifically configured to verify the validity of the first parameter information in one or more of the following manners: verifying whether a terminal device corresponding to the terminal device identifier has subscribed to a service of a network to which the first network slice belongs or a service of a home network corresponding to the first network slice; verifying whether the terminal device has subscribed to a service of the first network slice or has subscribed to a service of a network slice of a home network corresponding to the first network slice; verifying whether the terminal device has registered with a network to which the first network slice belongs; verifying whether the terminal device has accessed the first network slice; verifying whether the terminal device has registered with a network by using an access management network function corresponding to the access management network function identifier; verifying whether the terminal device has accessed the first network slice by using an access management network function; verifying whether the terminal device has accessed a network via the access type; verifying whether the registration or deregistration request indicated by the first indication information matches a stored registration status of the terminal device; verifying whether the session establishment or release request indicated by the second indication information matches a stored session status of the terminal device; verifying whether the session identifier or a session corresponding to the session identifier exists; verifying whether the session identifier or a session corresponding to the session identifier belongs to the terminal device; verifying whether the session identifier or a session corresponding to the session identifier belongs to the first network slice; verifying whether a session corresponding to the session identifier is managed by a session management network function corresponding to the session management network function identifier; verifying whether the session status is consistent with a current status of the session; or verifying whether the first network slice matches a data network corresponding to the data network identifier.

In an implementation, the processing unit 901 is specifically configured to: send a second message to a data management network function by using the transceiver unit 902, where the second message is used to request to verify the first parameter information, and receive a third message, where the third message includes a verification result of the first parameter information.

In an implementation, the second message includes one or more of the following information: a terminal device identifier, indication information for verifying a subscription status of the terminal device, indication information for verifying an access status of the terminal device, an identifier of the first network slice, an identifier of a slice corresponding to the first network slice in a home network, an access management network function identifier, first indication information for requesting registration or deregistration, second indication information for requesting session establishment or release, a terminal device access type, a session identifier, a data network identifier, a session management network function identifier, or a session status.

In an implementation, the processing unit 901 is further configured to determine that a first condition is satisfied.

That a first condition is satisfied includes one or more of the following: duration of a timer reaches first duration, a number of times of receiving the first message reaches a first count threshold, a number of accessed terminal devices or sessions reaches a first number threshold, and indication information for triggering verification is received.

In an implementation, the first message is sent when an early admission control mode is inactive and a number of terminal devices that request to access the first network slice reaches a second number threshold.

In another possible embodiment, when the apparatus 900 is the data management network function, the transceiver unit 902 is configured to receive a second message, where the second message is used to request to verify first parameter information, and the first parameter information is used to update a number of terminal devices or sessions in a first network slice; and the processing unit 901 is configured to verify the first parameter information based on obtained second parameter information about a terminal device or a session, where the transceiver unit 902 is configured to send a third message to an admission control network function, the third message includes a verification result of the first parameter information, and the verification result includes that the first parameter information is valid or false.

In an implementation, the second message includes one or more of the following information: a terminal device identifier, indication information for verifying a subscription status of the terminal device, indication information for verifying an access status of the terminal device, an identifier of the first network slice, an identifier of a slice corresponding to the first network slice in a home network, an access management network function identifier, first indication information for requesting registration or deregistration, second indication information for requesting session establishment or release, a terminal device access type, a session identifier, a data network identifier, a session management network function identifier, or a session status.

In an implementation, the processing unit 901 is specifically configured to verify the first parameter information based on the obtained second parameter information of a terminal device or a session in one or more of the following manners: verifying the subscription status of the terminal device based on the indication information for verifying the subscription status of the terminal device; verifying whether a terminal device corresponding to the terminal device identifier has subscribed to a service of a network to which the first network slice belongs or a service of a home network corresponding to the first network slice; verifying whether the terminal device has subscribed to a service of the first network slice or has subscribed to a service of a network slice of a home network corresponding to the first network slice; verifying the access status of the terminal device based on the indication information for verifying the access status of the terminal device; verifying whether the terminal device has registered with a network to which the first network slice belongs; verifying whether the terminal device has accessed the first network slice; verifying whether the terminal device has registered with a network by using an access management network function corresponding to the access management network function identifier; verifying whether the terminal device has accessed the first network slice by using an access management network function; verifying whether the terminal device has accessed a network via the access type; verifying whether the registration or deregistration request indicated by the first indication information matches a stored registration status of the terminal device; verifying whether the session establishment or release request indicated by the second indication information matches a stored session status of the terminal device; verifying whether the session identifier or a session corresponding to the session identifier exists; verifying whether the session identifier or a session corresponding to the session identifier belongs to the terminal device; verifying whether the session identifier or a session corresponding to the session identifier belongs to the first network slice; verifying whether a session corresponding to the session identifier is managed by a session management network function corresponding to the session management network function identifier; verifying whether the session status is consistent with a current status of the session; or verifying whether the first network slice matches a data network corresponding to the data network identifier.

In still another possible embodiment, when the apparatus 900 is the access management network function, the processing unit 901 is configured to: when an early admission control mode is inactive, determine a number of terminal devices that request to access a first network slice; and the transceiver unit 902 is configured to: if the number of terminal devices that request to access a first network slice reaches a second number threshold, send a first message to an admission control network function, where the first message is used to update the number of terminal devices in the first network slice.

In an implementation, the transceiver unit 902 is further configured to receive a fourth message sent by the admission control network function, where the fourth message is used to modify the early admission control mode to the inactive state.

The processing unit 901 is further configured to: verify the fourth message, and if the verification succeeds, determine that the early admission control mode is the inactive state.

In an implementation, the processing unit 901 is specifically configured to verify one or more of an admission control network function identifier, an identifier of an operator network in which the admission control network function is located, and an identifier of the first network slice.

It should be noted that in embodiments of this application, division into modules is an example, and is only a logical function division. During actual implementation, there may be another division manner. In addition, functional units in embodiments of this application may be integrated into one processing unit, or may exist alone physically, or two or more units are integrated into one unit. The integrated unit may be implemented in a form of hardware, or may be implemented in a form of a software functional unit. For example, the transceiver unit may include a receiving unit and/or a sending unit.

When the integrated unit is implemented in the form of a software functional unit and sold or used as an independent product, the integrated unit may be stored in a computer-readable storage medium. Based on such an understanding, the integrated unit may be stored in a storage medium as a computer software product, and includes several instructions for instructing a computer device (which may be a personal computer, a server, or a network device) or a processor (processor) to perform all or some of the steps of the methods in embodiments of this application.

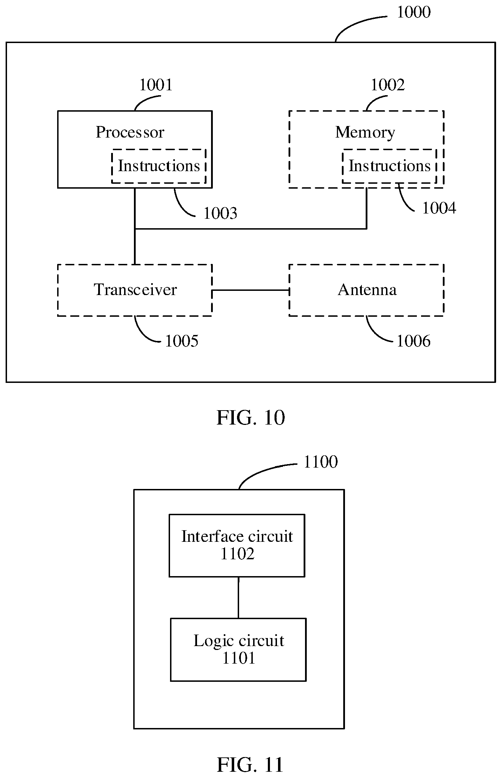

As shown in FIG. 10, an embodiment of this application further provides a schematic diagram of a structure of a communication apparatus 1000. The apparatus 1000 may be configured to implement the methods described in the foregoing method embodiments. For details, refer to the description in the foregoing method embodiments.

The apparatus 1000 includes one or more processors 1001. The processor 1001 may be a general-purpose processor, a dedicated processor, or the like. For example, the processor 1001 may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program. The communication apparatus may include a transceiver unit, configured to input (receive) and output (send) signals. For example, the transceiver unit may be a transceiver or a radio frequency chip.

The apparatus 1000 includes one or more processors 1001, and the one or more processors 1001 may implement the methods in the foregoing embodiments.

Optionally, the processor 1001 may further implement another function in addition to the methods in the foregoing embodiments.

In a design, the processor 1001 may execute instructions, so that the apparatus 1000 performs the methods described in the foregoing method embodiments. All or some of the instructions may be stored in the processor 1001. For example, all or some of instructions 1003 may be stored in the processor 1001, or the instructions 1003 are stored in the processor 1001, and instructions 1004 are stored in a memory 1002 coupled to the processor. The processor 1001 may synchronously execute the instructions 1003 and the instructions 1004, so that the apparatus 1000 performs the methods described in the foregoing method embodiments. The instructions 1003 and the instructions 1004 are also referred to as computer programs.

In another possible design, the communication apparatus 1000 may further include a circuit, and the circuit may implement functions in the foregoing method embodiments.

In still another possible design, the communication apparatus 1000 may include one or more memories 1002 storing instructions 1004. The instructions may be run on the processor 1001, so that the communication apparatus 1000 performs the methods described in the foregoing method embodiments. Optionally, the memory may further store data. Optionally, the processor 1001 may alternatively store instructions and/or data. For example, the one or more memories 1002 may store the correspondence described in the foregoing embodiments, or the related parameter, table, or the like in the foregoing embodiments. The processor and the memory may be separately disposed, or may be integrated with each other.

In still another possible design, the apparatus 1000 may further include a transceiver 1005 and an antenna 1006. The processor 1001 may be referred to as a processing unit, and is configured to control the apparatus (a terminal or a base station). The transceiver 1005 may be referred to as a transceiver, a transceiver circuit, a transceiver unit, or the like, and is configured to implement a transceiver function of the apparatus by using the antenna 1006.

The processor may be a general-purpose central processing unit (central processing unit, CPU), a microprocessor, an application-specific integrated circuit (application-specific integrated circuit, ASIC), one or more integrated circuits configured to control program execution of the solutions of this application, a general-purpose processor, a digital signal processor (digital signal processor, DSP), a programmable gate array (field programmable gate array, FPGA) or another programmable logic device, a discrete gate or transistor logic device, or a discrete hardware component. The methods, the steps, and logic block diagrams that are disclosed in embodiments of this application may be implemented or performed. The general-purpose processor may be a microprocessor, or the processor may be any conventional processor, or the like. The steps of the methods disclosed with reference to embodiments of this application may be directly performed and completed by a hardware decoding processor, or may be performed and completed by using a combination of hardware and software modules in the decoding processor. The software module may be in a storage medium, and the storage medium is located in a memory.

The memory may be a volatile memory or a non-volatile memory, or may include both a volatile memory and a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but not limited to, these memories and any memory of another proper type. The memory may exist independently, and is connected to the processor through a communication line. The memory may alternatively be integrated with the processor.

An embodiment of this application further provides a computer-readable medium. The computer-readable medium stores a computer program. When the computer program is executed by a computer, the communication method in any one of the foregoing method embodiments is implemented.

An embodiment of this application further provides a computer program product, including a computer program. When the computer program is executed by a computer, the communication method in any one of the foregoing method embodiments is implemented.

An embodiment of this application further provides a communication system, including an admission control network function, and may further include an access management network function and/or a session management network function. Optionally, the communication system may further include a data management network function. Each network function may implement any one of the foregoing method embodiments.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, the procedure or functions according to embodiments of this application are entirely or partially generated. The computer may be the foregoing communication apparatus. The computer instructions may be stored in a computer-readable storage medium, or may be transmitted from one computer-readable storage medium to another computer-readable storage medium. The computer-readable storage medium may be the foregoing storage medium or the foregoing memory.

In a possible design, when the communication apparatus is a chip, for example, a chip in a network device, or a chip in a terminal device, the determining unit or the processor 1001 may be one or more logic circuits, and the sending unit, the receiving unit, or the transceiver 1005 may be an input/output interface, or may be referred to as a communication interface, an interface circuit, an interface, or the like. Alternatively, the transceiver 1005 may be a sending unit and a receiving unit. The sending unit may be an output interface, and the receiving unit may be an input interface. Alternatively, the sending unit and the receiving unit are integrated into one unit, for example, an input/output interface. As shown in FIG. 11, a communication apparatus 1100 shown in FIG. 11 includes a logic circuit 1101 and an interface circuit 1102. In other words, the determining unit or the processor 1001 may be implemented by using the logic circuit 1101, and the sending unit, the receiving unit, or the transceiver 1005 may be implemented by using the interface circuit 1102. The logic circuit 1101 may be a chip, a processing circuit, an integrated circuit, a system on chip (system on chip, SoC), or the like. The interface circuit 1102 may be a communication interface, an input/output interface, or the like. In embodiments of this application, the logic circuit may further be coupled to the interface. A specific connection manner of the logical circuit and the interface is not limited in embodiments of this application.

In some embodiments of this application, the logic circuit 1101 and the interface circuit 1102 may be configured to perform a function, an operation, or the like performed by the terminal device, the policy control network function, or the access management network function. The interface circuit may be configured to receive a signal from a communication apparatus other than the communication apparatus and transmit the signal to the logic circuit, or send a signal from the logic circuit to a communication apparatus other than the communication apparatus. The logic circuit may be configured to implement any one of the foregoing method embodiments by executing code instructions. The interface circuit 1102 may be configured to receive a signal from a communication apparatus other than the communication apparatus 1100 and transmit the signal to the logic circuit 1101, or send a signal from the logic circuit 1101 to a communication apparatus other than the communication apparatus 1100. The logic circuit 1101 may be configured to implement any one of the foregoing method embodiments by executing code instructions.

For example, the interface circuit 1102 is configured to receive a first message, where the first message includes first parameter information used to update a number of terminal devices or sessions in a first network slice. The logic circuit 1101 is configured to: verify validity of the first parameter information, and if the first parameter information is valid, update the number of terminal devices or sessions in the first network slice. For functions or operations performed by the network device or the terminal device, refer to the foregoing method embodiments. Details are not described herein again.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether these functions are performed by hardware or hardware depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When the present invention is implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a computer.

In conclusion, the foregoing descriptions are merely example embodiments of the technical solutions of this application, but are not intended to limit the protection scope of this application. Any modification, equivalent replacement, improvement, or the like made without departing from the principle of this application shall fall within the protection scope of this application.

## Claims

1. A communication method, comprising:
receiving, by an admission control network function, a first message, wherein the first message comprises first parameter information used to update a number of terminal devices or sessions in a first network slice, and the first parameter information comprises one or more of the following information: a terminal device identifier, an identifier of the first network slice, an access management network function identifier, first indication information for requesting registration or deregistration, second indication information for requesting session establishment or release, a terminal device access type, a session identifier, a data network identifier, a session management network function identifier, or a session status;
verifying, by the admission control network function, validity of the first parameter information; and
if the first parameter information is valid, updating, by the admission control network function, the number of terminal devices or sessions in the first network slice.

2. The method according to claim 1, wherein the verifying, by the admission control network function, the validity of the first parameter information comprises one or more of the following:
verifying, by the admission control network function, whether a terminal device corresponding to the terminal device identifier has subscribed to a service of a network to which the first network slice belongs or a service of a home network corresponding to the first network slice;
verifying, by the admission control network function, whether the terminal device has subscribed to a service of the first network slice or has subscribed to a service of a network slice of a home network corresponding to the first network slice;
verifying, by the admission control network function, whether the terminal device has registered with a network to which the first network slice belongs;
verifying, by the admission control network function, whether the terminal device has accessed the first network slice;
verifying, by the admission control network function, whether the terminal device has registered with a network by using an access management network function corresponding to the access management network function identifier;
verifying, by the admission control network function, whether the terminal device has accessed the first network slice by using the access management network function;
verifying, by the admission control network function, whether the terminal device has accessed a network via the terminal device access type;
verifying, by the admission control network function, whether the registration or deregistration request indicated by the first indication information matches a stored registration status of the terminal device;
verifying, by the admission control network function, whether the session establishment or release request indicated by the second indication information matches a stored session status of the terminal device;
verifying, by the admission control network function, whether the session identifier or a session corresponding to the session identifier exists;
verifying, by the admission control network function, whether the session identifier or a session corresponding to the session identifier belongs to the terminal device;
verifying, by the admission control network function, whether the session identifier or a session corresponding to the session identifier belongs to the first network slice;
verifying, by the admission control network function, whether a session corresponding to the session identifier is managed by a session management network function corresponding to the session management network function identifier;
verifying, by the admission control network function, whether the session status is consistent with a current status of the session; or
verifying, by the admission control network function, whether the first network slice matches a data network corresponding to the data network identifier.

3. The method according to claim 1 or 2, wherein the verifying, by the admission control network function, the validity of the first parameter information comprises:
sending, by the admission control network function, a second message to a data management network function, wherein the second message is used to request to verify the first parameter information; and
receiving, by the admission control network function, a third message, wherein the third message comprises a verification result of the first parameter information.

4. The method according to claim 3, wherein the second message comprises one or more of the following information: the terminal device identifier, indication information for verifying a subscription status of a terminal device, indication information for verifying an access status of a terminal device, the identifier of the first network slice, an identifier of a slice corresponding to the first network slice in a home network, the access management network function identifier, the first indication information for requesting registration or deregistration, the second indication information for requesting session establishment or release, the terminal device access type, a session identifier, the data network identifier, the session management network function identifier, or the session status.

5. The method according to any one of claims 1 to 4, wherein before the verifying, by the admission control network function, the validity of the first parameter information, the method further comprises:
determining, by the admission control network function, that a first condition is satisfied; and
that a first condition is satisfied comprises one or more of the following: duration of a timer reaches first duration, a number of times of receiving the first message reaches a first count threshold, a number of accessed terminal devices or sessions reaches a first number threshold, and indication information for triggering verification is received.

6. The method according to any one of claims 1 to 5, wherein the first message is sent when an early admission control mode is inactive and a number of terminal devices that request to access the first network slice reaches a second number threshold.

7. A communication method, comprising:
receiving, by a data management network function, a second message, wherein the second message is used to request to verify first parameter information, and the first parameter information is used to update a number of terminal devices or sessions in a first network slice;
verifying, by the data management network function, the first parameter information based on obtained second parameter information about a terminal device or a session; and
sending, by the data management network function, a third message to an admission control network function, wherein the third message comprises a verification result of the first parameter information, and the verification result comprises that the first parameter information is valid or false.

8. The method according to claim 7, wherein the second message comprises one or more of the following information: a terminal device identifier, indication information for verifying a subscription status of a terminal device, indication information for verifying an access status of a terminal device, an identifier of the first network slice, an identifier of a slice corresponding to the first network slice in a home network, an access management network function identifier, first indication information for requesting registration or deregistration, second indication information for requesting session establishment or release, a terminal device access type, a session identifier, a data network identifier, a session management network function identifier, or a session status.

9. The method according to claim 8, wherein the verifying, by the data management network function, the first parameter information based on the obtained second parameter information of the terminal device or the session comprises one or more of the following:
verifying, by the data management network function, a subscription status of the terminal device based on the indication information for verifying a subscription status of a terminal device;
verifying, by the data management network function, whether a terminal device corresponding to the terminal device identifier has subscribed to a service of a network to which the first network slice belongs or a service of a home network corresponding to the first network slice;
verifying, by the data management network function, whether the terminal device has subscribed to a service of the first network slice or has subscribed to a service of a network slice of a home network corresponding to the first network slice;
verifying, by the data management network function, an access status of the terminal device based on the indication information for verifying an access status of a terminal device;
verifying, by the data management network function, whether the terminal device has registered with a network to which the first network slice belongs;
verifying, by the data management network function, whether the terminal device has accessed the first network slice;
verifying, by the data management network function, whether the terminal device has registered with a network by using an access management network function corresponding to the access management network function identifier;
verifying, by the data management network function, whether the terminal device has accessed the first network slice by using the access management network function;
verifying, by the data management network function, whether the terminal device has accessed a network via the terminal device access type;
verifying, by the data management network function, whether the registration or deregistration request indicated by the first indication information matches a stored registration status of the terminal device;
verifying, by the data management network function, whether the session establishment or release request indicated by the second indication information matches a stored session status of the terminal device;
verifying, by the data management network function, whether the session identifier or a session corresponding to the session identifier exists;
verifying, by the data management network function, whether the session identifier or a session corresponding to the session identifier belongs to the terminal device;
verifying, by the data management network function, whether the session identifier or a session corresponding to the session identifier belongs to the first network slice;
verifying, by the data management network function, whether a session corresponding to the session identifier is managed by a session management network function corresponding to the session management network function identifier;
verifying, by the data management network function, whether the session status is consistent with a current status of the session; or
verifying, by the data management network function, whether the first network slice matches a data network corresponding to the data network identifier.

10. A communication apparatus, comprising:
a transceiver unit, configured to receive a first message, wherein the first message comprises first parameter information used to update a number of terminal devices or sessions in a first network slice, and the first parameter information comprises one or more of the following information: a terminal device identifier, an identifier of the first network slice, an access management network function identifier, first indication information for requesting registration or deregistration, second indication information for requesting session establishment or release, a terminal device access type, a session identifier, a data network identifier, a session management network function identifier, or a session status; and
a processing unit, configured to: verify validity of the first parameter information, and if the first parameter information is valid, update the number of terminal devices or sessions in the first network slice.

11. The apparatus according to claim 10, wherein the processing unit is specifically configured to verify the validity of the first parameter information in one or more of the following manners:
verifying whether a terminal device corresponding to the terminal device identifier has subscribed to a service of a network to which the first network slice belongs or a service of a home network corresponding to the first network slice;
verifying whether the terminal device has subscribed to a service of the first network slice or has subscribed to a service of a network slice of a home network corresponding to the first network slice;
verifying whether the terminal device has registered with a network to which the first network slice belongs;
verifying whether the terminal device has accessed the first network slice;
verifying whether the terminal device has registered with a network by using an access management network function corresponding to the access management network function identifier;
verifying whether the terminal device has accessed the first network slice by using the access management network function;
verifying whether the terminal device has accessed a network via the terminal device access type;
verifying whether the registration or deregistration request indicated by the first indication information matches a stored registration status of the terminal device;
verifying whether the session establishment or release request indicated by the second indication information matches a stored session status of the terminal device;
verifying whether the session identifier or a session corresponding to the session identifier exists;
verifying whether the session identifier or a session corresponding to the session identifier belongs to the terminal device;
verifying whether the session identifier or a session corresponding to the session identifier belongs to the first network slice;
verifying whether a session corresponding to the session identifier is managed by a session management network function corresponding to the session management network function identifier;
verifying whether the session status is consistent with a current status of the session; or
verifying whether the first network slice matches a data network corresponding to the data network identifier.

12. The apparatus according to claim 10 or 11, wherein the transceiver unit is specifically configured to: send a second message to a data management network function, wherein the second message is used to request to verify the first parameter information, and receive a third message, wherein the third message comprises a verification result of the first parameter information.

13. The apparatus according to claim 12, wherein the second message comprises one or more of the following information: the terminal device identifier, indication information for verifying a subscription status of a terminal device, indication information for verifying an access status of a terminal device, the identifier of the first network slice, an identifier of a slice corresponding to the first network slice in a home network, the access management network function identifier, the first indication information for requesting registration or deregistration, the second indication information for requesting session establishment or release, the terminal device access type, a session identifier, the data network identifier, the session management network function identifier, or the session status.

14. The apparatus according to any one of claims 10 to 13, wherein the processing unit is further configured to determine that a first condition is satisfied; and that a first condition is satisfied comprises one or more of the following: duration of a timer reaches first duration, a number of times of receiving the first message reaches a first count threshold, a number of accessed terminal devices or sessions reaches a first number threshold, and indication information for triggering verification is received.

15. The apparatus according to any one of claims 10 to 14, wherein the first message is sent when an early admission control mode is inactive and a number of terminal devices that request to access the first network slice reaches a second number threshold.

16. A communication apparatus, comprising:
a transceiver unit, configured to receive a second message, wherein the second message is used to request to verify first parameter information, and the first parameter information is used to update a number of terminal devices or sessions in a first network slice; and
a processing unit, configured to verify the first parameter information based on obtained second parameter information about a terminal device or a session, wherein
the transceiver unit is configured to send a third message to an admission control network function, the third message comprises a verification result of the first parameter information, and the verification result comprises that the first parameter information is valid or false.

17. The apparatus according to claim 16, wherein the second message comprises one or more of the following information: a terminal device identifier, indication information for verifying a subscription status of a terminal device, indication information for verifying an access status of a terminal device, an identifier of the first network slice, an identifier of a slice corresponding to the first network slice in a home network, an access management network function identifier, first indication information for requesting registration or deregistration, second indication information for requesting session establishment or release, an terminal device access type, a session identifier, a data network identifier, a session management network function identifier, or a session status.

18. The apparatus according to claim 17, wherein the processing unit is specifically configured to verify the first parameter information based on the obtained second parameter information of a terminal device or a session in one or more of the following manners:
verifying a subscription status of the terminal device based on the indication information for verifying a subscription status of a terminal device;
verifying whether a terminal device corresponding to the terminal device identifier has subscribed to a service of a network to which the first network slice belongs or a service of a home network corresponding to the first network slice;
verifying whether the terminal device has subscribed to a service of the first network slice or has subscribed to a service of a network slice of a home network corresponding to the first network slice;
verifying an access status of the terminal device based on the indication information for verifying an access status of a terminal device;
verifying whether the terminal device has registered with a network to which the first network slice belongs;
verifying whether the terminal device has accessed the first network slice;
verifying whether the terminal device has registered with a network by using an access management network function corresponding to the access management network function identifier;
verifying whether the terminal device has accessed the first network slice by using the access management network function;
verifying whether the terminal device has accessed a network via the terminal device access type;
verifying whether the registration or deregistration request indicated by the first indication information matches a stored registration status of the terminal device;
verifying whether the session establishment or release request indicated by the second indication information matches a stored session status of the terminal device;
verifying whether the session identifier or a session corresponding to the session identifier exists;
verifying whether the session identifier or a session corresponding to the session identifier belongs to the terminal device;
verifying whether the session identifier or a session corresponding to the session identifier belongs to the first network slice;
verifying whether a session corresponding to the session identifier is managed by a session management network function corresponding to the session management network function identifier;
verifying whether the session status is consistent with a current status of the session; or
verifying whether the first network slice matches a data network corresponding to the data network identifier.

19. A communication apparatus, comprising a processor, wherein the processor is configured to perform the method according to any one of claims 1 to 9.

20. A communication apparatus, comprising a processor and a memory, wherein the processor is coupled to the memory;
the memory stores a computer program or instructions; and
the processor is configured to execute the computer program or the instructions stored in the memory, so that the apparatus performs the method according to any one of claims 1 to 9.

21. A communication apparatus, comprising a logic circuit and an interface circuit, wherein
the interface circuit is configured to communicate with a module other than the communication apparatus; and
the logic circuit is configured to execute a computer program or instructions, so that the communication apparatus performs the method according to any one of claims 1 to 9.

22. A computer-readable storage medium, comprising a computer program or instructions, wherein when the computer program or the instructions is/are run on a computer, the method according to any one of claims 1 to 9 is performed.

23. A computer program product, comprising a computer program or instructions, wherein when the computer program or the instructions is/are run on a computer, the method according to any one of claims 1 to 9 is performed.
